(19) Europäisches Patentamt
European Patent Office
Office européen des brevets

(11) EP 1 711 654 B1

(12) **FASCICULE DE BREVET EUROPEEN**

(45) Date de publication et mention de la délivrance du brevet:
**01.02.2012 Bulletin 2012/05**

(21) Numéro de dépôt: **04805345.8**

(22) Date de dépôt: **29.10.2004**

(51) Int Cl.:
***D06N 3/12*** (2006.01) ***D06M 15/643*** (2006.01)
***C09D 183/04*** (2006.01)

(86) Numéro de dépôt international:
**PCT/FR2004/002791**

(87) Numéro de publication internationale:
**WO 2005/045123 (19.05.2005 Gazette 2005/20)**

(54) **COMPOSITION SILICONE ET PROCEDE UTILE POUR AMELIORER LA RESISTANCE A LA DECHIRURE ET AU PEIGNAGE DE SAC GONFLABLE, DESTINES A LA PROTECTION D' UN OCCUPANT DE VEHICULE**

SILICONZUSAMMENSETZUNG UND VERFAHREN ZUR VERBESSERUNG DER WEITERREISS- UND AUSFRANSFESTIGKEIT EINES LUFTSACKS ZUM FAHRZEUGINSASSENSCHUTZ

SILICON COMPOSITION AND METHOD FOR IMPROVING TEARING AND COMBING RESISTANCE OF AN AIRBAG FOR PROTECTING A VEHICLE USER

(84) Etats contractants désignés:
**AT BE BG CH CY CZ DE DK EE ES FI FR GB GR HU IE IT LI LU MC NL PL PT RO SE SI SK TR**

(30) Priorité: **03.11.2003 FR 0312845**

(43) Date de publication de la demande:
**18.10.2006 Bulletin 2006/42**

(73) Titulaire: **Bluestar Silicones France**
**69486 Lyon (FR)**

(72) Inventeurs:
- **POUCHELON, Alain**
**F-69330 MEYZIEU (FR)**
- **DUMONT, Laurent**
**F-73290 La Motte Servolex (FR)**

(74) Mandataire: **Mekki, Boualem et al**
**Bluestar Silicones France**
**55, avenue des Frères Perret**
**69191 Saint-Fons (FR)**

(56) Documents cités:
**WO-A-01/12894** **US-A1- 2003 105 262**
**US-B1- 6 387 451**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

Le domaine général de l'invention est celui des compositions silicones d'enduction, en particulier celles du type bicomposant ou multicomposant, réticulables par des réactions de polyaddition ou d'hydrosilylation pour produire un élastomère en couche mince. Ces compositions réticulées sont adaptées, entre autres comme revêtement, par exemple de protection ou de renfort mécanique de différents substrats en matière textile comme par exemple des supports fibreux, tissés, tricotés ou non tissés.

De tels revêtements en silicone sont généralement obtenus par enduction du substrat puis durcissement découlant de la polyaddition des groupements insaturés (alcényles, e.g. Si-Vi) d'un polyorganosiloxane sur des hydrogènes du même ou d'un autre polyorganosiloxane.

Ces compositions silicones ont trouvé un débouché important dans le revêtement des matériaux souples - tissés, tricotés ou non tissés - utilisés pour la fabrication de sacs de protection individuelle d'occupant de véhicules, dénommés également "airbag".

Pour plus de détails sur ces sacs de protection individuels ou "airbag", on peut se référer notamment au brevet français FR-A-2 668 106.

La présente invention concerne aussi l'application des silicones dans la fabrication de tels sacs de protection.

Historiquement, ces derniers sont formés par une toile en fibre synthétique, par exemple en polyamide (Nylon)®, recouverte sur au moins l'une de ces faces d'une couche d'un élastomère du type chloroprène. La présence d'une telle couche ou d'un tel revêtement de protection est dictée par le fait que les gaz libérés par le générateur de gaz (par exemple : monoxyde de carbone, NOx) en cas de choc, sont extrêmement chauds et contiennent des particules incandescentes susceptibles d'endommager le sac en Nylon®.

La couche de protection interne en élastomère doit donc être particulièrement résistante aux hautes températures et aux contraintes mécaniques. Il importe également que ce revêtement élastomère se présente sous la forme d'un film fin, uniforme et parfaitement adhérent au support en tissu synthétique, formant les parois de "l'airbag".

Les compositions silicones ont aisément supplanté les chloroprènes dans cette application, car il s'est avéré que ces derniers ne répondent pas de façon satisfaisante à toutes les spécifications susvisées.

Cependant, une autre contrainte émerge actuellement et nécessite de nouvelles solutions. L'utilisation de générateurs de gaz plus agressif mécaniquement et thermiquement entraîne des contraintes supplémentaires au niveau des coutures de l'airbag. Celles-ci s'additionnent aux contraintes physiques liées au déploiement du sac gonflable et peuvent produire un arrachement du tissu enduit d'élastomère et l'ouverture de ces coutures. Il en résulte un point d'échappement de gaz chaud, émanant du générateur, à travers les coutures engendrant des points de faiblesse à l'origine de déchirure, de peignage (effilochage) ou voir même de rupture de certains airbags. C'est ainsi que les fabricants d'airbags sont à la recherche de compositions élastomères silicones d'enduction pour des applications présentant des propriétés mécaniques optimales, notamment une bonne résistance à la déchirure et au peignage (aptitude du tissu enduit à résister au peignage des coutures du sac gonflable). En effet, la résistance au peignage devient un critère de plus en plus important pour cette industrie car les contraintes dues au peignage des coutures du sac gonflable sont comparables à celles observées lors du déploiement d'un airbag en fonctionnement.

Un des problèmes majeurs, rencontrés actuellement dans l'utilisation de tissus enduits d'élastomères silicones dans les airbags, réside dans le fait qu'ils possèdent soit une bonne résistance au peignage, soit une bonne résistance à la déchirure. L'obtention d'un bon compromis entre ces deux propriétés, tout en maintenant de bonnes propriétés en matière d'adhérence et de minceur, est fondamentale et mobilise actuellement de nombreux efforts de recherche. De plus, les fabricants d'airbags sont aussi à la recherche de nouvelles solutions permettant de réduire leurs coûts de fabrication, notamment par l'utilisation de tissus décontexturés (réduction du nombre de fil par centimètre) qui nécessite aussi une maîtrise de la résistance au peignage et à la déchirure des tissus enduits d'élastomères silicones.

L'art antérieur EP-A-0 553 840 et US-5 296 298 décrit des compositions silicones pour des applications airbags.

Selon EP-A-0 553 840, ces compositions silicones connues comprennent :

- (A) un polydiorganosiloxane ayant au moins deux groupements alcényles par molécule,
- (B) un polyorganohydrogénosiloxane ayant au moins deux atomes d'hydrogène liés au silicium dans chaque molécule,
- (C) un catalyseur métallique du groupe du platine,
- (D) un promoteur d'adhérence consistant dans un composé organosilicié époxy-fonctionnel,
- (E) une charge inorganique dont la quantité en poids est définie par rapport à la quantité du polyorganosiloxane (A),
- (F) une résine polyorganosiloxane, et éventuellement
- (G) un composé utile comme inhibiteur de réticulation.

Cependant, cette référence ne présente que des solutions pour obtenir des films homogènes et adhésifs pour des revêtements d'airbag et est silencieuse quand à la résolution du problème cité ci-dessus.

Selon US-5 296 298, ces compositions silicones comprennent :

- (A) un polydiorganosiloxane ayant au moins deux groupements alcényles par molécule,
- (B) un polyorganohydrogénosiloxane ayant au moins deux atomes d'hydrogène liés au silicium dans chaque molécule,
- (C) un silane à fonction méthacrylique,
- (D) un époxyalkoxysilane,
- (E) un chélate d'aluminium, et
- (F) un catalyseur métallique du groupe du platine.

Dans cette.référence, les charges ne sont mentionnées qu'à titre optionnel tout en ne présentant que des solutions pour obtenir des films silicones ayant une bonne adhésion sur le support de l'airbag. Ces compositions ne sont pas adaptées aux nouvelles attentes des fabricants d'airbag concernant la maîtrise des propriétés de résistance au peignage et à la déchirure.

Dans le document EP-A-0 681 014 décrit une composition silicone, applicable notamment comme revêtement interne "d'airbag" et présentant à cette fin de bonnes propriétés en matière notamment de résistance au feu et à la température, de propriétés mécaniques, de tenue au vieillissement, d'adhérence et d'uniformité de surface, l'adhérence sur des substrats en matière textile étant plus particulièrement recherchée. La solution proposée par cette invention consiste à mettre en oeuvre :

- une composition silicone d'enduction consistant dans le mélange formé de:

  (1) au moins un polyorganosiloxane présentant, par molécule, au moins deux groupes alcényles, en C2-C6 liés au silicium,
  (2) au moins un polyorganosiloxane présentant, par molécule, au moins deux atomes d'hydrogène liés au silicium,
  (3) une quantité catalytiquement efficace d'au moins un catalyseur, composé d'au moins un métal appartenant au groupe du platine,
  (4) un promoteur d'adhérence,
  (5) éventuellement une charge minérale,
  (6) éventuellement au moins un inhibiteur de réticulation, et
  (7) éventuellement au moins une résine polyorganosiloxane,

Composition dans laquelle le promoteur d'adhérence est constitué exclusivement par l'association au moins ternaire des ingrédients suivants :

- (4-1) au moins un organosilane alcoxylé contenant, par molécule, au moins un groupe alcényle en C2 - C6,
- (4-2) au moins un composé organosilicié comprenant au moins un radical époxy, et
- (4-3) au moins un chélate de métal M et/ou un alcoxyde métallique de formule générale : M(OJ)n, avec n = valence de M et J = alkyle linéaire ou ramifié en C1 - C8, M étant choisi dans le groupe formé par : Ti, Zr, Ge, Li, Mn, Fe, Al et Mg.

Il est à noter q'une charge renforçante telle qu'une silice de pyrogénation est toujours présente dans la partie expérimentale du document EP-A-0 681 014. Ces compositions ne sont pas adaptées aux nouvelles attentes des fabricants d'airbag concernant la maîtrise des propriétés de résistance au peignage et à la déchirure.

Le brevet US-B1-6387451 décrit un procédé d'enduction sur un textile synthétique utilisant une composition silicone d'enduction réticulable par des réactions de polyaddition comprenant :

o un polyorganosiloxane avec des groupes alcényles,
o un polyorganosiloxane avec des groupements SiH,
o un catalyseur au platine,
o une résine silicone,
o et un mélange servant de promoteur d'adhésion comprenant :

■ (i) un composé organosilicé comprenant des groupements époxy et alcoxy
■ (ii) un dérivé organique du titane
■ (iii) un polyorganosiloxane à bout de chaine silanol et fonctionnalisé par des groupements alcényles, et
■ (iv) a composé qui est un chélate métallique.

La présente invention vise à remédier aux inconvénients de l'art antérieur.

Dans cette perspective, l'un des objectifs essentiel de l'invention est de fournir un procédé pour améliorer la résistance au peignage et la résistance à la déchirure d'un support fibreux tissé, tricoté, ou non tissé. Ces supports traités par le procédé selon l'invention sont utiles notamment pour des applications dans le domaine des sacs gonflables de sécurité pour véhicules, ou airbags, présentant non seulement des propriétés optimales en matière d'adhérence, de minceur, de légèreté et de résistance au froissement et à l'abrasion (test "scrub"), mais aussi de bonnes propriétés de résistance au peignage et à la déchirure.

Un second objectif de l'invention est de fournir une composition silicone d'enduction réticulable par des réactions de polyaddition utile notamment pour des applications dans le domaine des sacs gonflables de sécurité pour véhicules, ou airbags, présentant après réticulation des propriétés optimales en matière d'adhérence, de minceur, de légèreté et de résistance au froissement et à l'abrasion (test "scrub"), mais aussi de bonnes propriétés de résistance au peignage et à la déchirure.

Un troisième objectif de l'invention est de fournir une composition siiicone d'enduction réticulable par des réactions de polyaddition pour "airbag", qui soit facile à mettre en oeuvre et à appliquer et qui, en outre, soit économique.

Enfin, un autre objectif de l'invention est de permettre une diminution du coût de l'enduction de manière à élargir le domaine d'utilisation de l'enduction silicone et ainsi de faire profiter des propriétés avantageuses de ce type d'enduction à des applications aujourd'hui exclues du champ d'application pour des raisons de coût.

Ces objectifs parmi d'autres, sont atteints par l'invention qui consiste en un procédé pour améliorer la résistance au peignage et la résistance à la déchirure d'un support fibreux tissé, tricoté, ou non tissé, comprenant les étapes suivantes :

a) la préparation d'une composition silicone d'enduction (A) réticulable comprenant :

- les composants (a-1) ou (a-2) :
  - (a-1) correspondant à au moins un polyorganosiloxane susceptible de réticuler par l'action d'un catalyseur à base d'au moins un péroxyde organique, et
  - (a-2) correspondant à un mélange de polyorganosiloxane susceptible de réticuler par des réactions de polyaddition comprenant :
  - au moins un polyorganosiloxane (I) présentant, par molécule, au moins deux groupes alcényles, en C2-C6 liés au silicium, et
  - au moins un polyorganosiloxane (II) présentant, par molécule, au moins deux atomes d'hydrogène liés au silicium,
- une quantité efficace de catalyseur de réticulation consistant : lorsque (a-1) est mis en oeuvre dans au moins un péroxyde organique et lorsque (a-2) est mis en oeuvre dans au moins un métal (ou composé) du groupe du platine,
- éventuellement au moins un promoteur d'adhérence (IV), et
- un système additif (B) améliorant la résistance au peignage et la résistance à la déchirure, dont les constituants sont additionnés séquentiellement ou simultanément, constitué par le mélange de:
  - au moins une résine polyorganosiloxane (V) présente jusqu'à 60 % en poids par rapport au poids total de la composition et éventuellement mélangée à au moins un polyorganosiloxane servant de diluant, et
  - du carbonate de calcium ($CaCO_3$) dont la quatité est comprise entre 10 et 24% en poids par rapport au poids total de la composition ;

b) l'application d'au moins 10 g/m$^2$, de préférence d'au moins 20 g/m$^2$ et encore plus préférentiellement d'au moins 30 g/m$^2$, sur une ou deux faces d'un support fibreux tissé, tricoté, ou non tissé de la composition silicone d'enduction (A) préparée à l'étape a), et

c) la réticutation du dépôt formé à l'étape b) pour former un élastomère par chauffage à une température pouvant atteindre 210°C, par rayonnement électromagnétique, en particulier par rayonnement infra-rouge.

Il est du mérite de la Demanderesse d'avoir pu mettre en évidence l'importance du système additif (B) en vue de maîtriser la résistance au peignage et la résistance à la déchirure d'un support fibreux tissé, tricoté, ou non tissé. Le carbonate de calcium n'a pas besoin de subir un traitement de compatibilisation (par chauffage ou traitement de surface) pour sa mise en oeuvre dans le système (B) et ne peut donc être assimiler à une simple charge semi-renforçante. Il n'était absolument pas prévisible que l'association de la résine (V) et du carbonate de calcium, dans une mise en oeuvre ne nécessitant pas de traitement de compatibilisation, conduirait, in fine, à une aussi nette amélioration des propriétés

de résistance au peignage et à la déchirure d'un support fibreux tissé, tricoté, ou non tissé notamment pour des applications dans les airbags.

Cela est d'autant plus étonnant que ce gain ne se perd pas au détriment des autres propriétés de dureté, de résistance mécanique, d'uniformité de surface, et de résistance à la chaleur du revêtement silicone.

Le polyorganosiloxane (a1) susceptible de réticuler par l'action d'un catalyseur à base d'au moins un péroxyde organique est avantageusement un produit présentant des motifs siloxyles de formules :

$$R^1_a SiO \frac{(4-a)}{2}$$

**(I-1)**

dans laquelle :

- les symboles $R^1$, identiques ou différents, représentent un groupe hydrocarboné ayant de 1 à 12 atomes de carbone, de préférence de 1 à 8 atomes de carbones, éventuellement substitué, et
- a est 1, 2 ou 3.

De préférence, les symboles $R^1$ sont choisis parmi :

- les groupes méthyle, éthyle, propyle, butyle, hexyle et dodécyle,
- les groupes cycloalkyles comme par exemple le cyclohexyle,
- les groupes alcényles comme par exemple les groupes vinyle, allyle, butényle et hexènyle,
- les groupes aryles comme par exemple les groupes phényle, tolyle, aralkyle comme le β-phényleprolyle, et
- les groupes cités ci-dessus dans lesquels un ou plusieurs atomes d'hydrogène sont remplacés par un ou plusieurs atomes d'halogène, un groupe cyano ou équivalent d'un groupe cyano comme par exemple un chlorométhyle, trifluoropropyle ou cyanoéthyle.

De manière encore plus préférentielle, les polyorganosiloxanes (a-1) sont terminés en bout de chaîne par des motifs triméthylsilyle, diméthylvinyle, diméthylhydroxysilyle, trivinylsilyle.

Dans un mode de réalisation particulièrement avantageux, les polyorganosiloxanes (a-1) contiennent au moins deux groupements alcényles par molécule.

Parmi les péroxydes organiques utiles selon l'invention on peut citer le péroxyde de benzoyle, le péroxyde de bis(p-chlorobenzoyle), le péroxyde de bis(2,4-dichlorobenzoyle), le péroxyde de dicumyle, le péroxyde de di-t-butyle, le 2,5-diméthyl-2,5-di(t-butylpéroxy)hexane, le t-butyl-perbenzoate, le péroxyde de t-butylcumyle, les dérivés halogénés des péroxydes cités ci-dessus comme par exemple le péroxyde de bis(2,4-dichlorobenzoyle), le 1,6-bis(p-toluoylpéroxycarbonyloxy)hexane , le 1,6-bis(benzoylperoxy-carbonyloxy)hexane, le 1,6-bis(p-toluoylpéroxycarbonyloxy)butane et le 1,6-bis(2,4-diméthylbenzoylpéroxycarbonyloxy)hexane.

Selon un mode de réalisation préféré du procédé selon l'invention, la composition silicone d'enduction (A) réticulable mis en oeuvre comprend des polyorganosiloxanes susceptible de réticuler par des réactions de polyaddition. Cette composition (A) comprend un mélange formé de :

(a) au moins un polyorganosiloxane (I) présentant, par molécule, au moins deux groupes alcényles, en C2-C6 liés au silicium,
(b) au moins un polyorganosiloxane (II) présentant, par molécule, au moins deux atomes d'hydrogène liés au silicium,
(c) une quantité catalytiquement efficace d'au moins un catalyseur (III), composé d'au moins un métal appartenant au groupe du platine,
(d) au moins un promoteur d'adhérence (IV),
(e) d'un système additif (B) améliorant la résistance au peignage et la résistance à la déchirure, dont les constituants sont additionnés séquentiellement ou simultanément, constitué par le mélange formé à partir de:

- au moins une résine polyorganosiloxane (V) présente jusqu'à 60 % en poids par rapport au poids total de la composition éventuellement mélangée à au moins un polyorganosiloxane servant de diluant, et
- du carbonate de calcium ($CaCO_3$) dont la quantité est comprise entre 10 et 24% en poids par rapport au poids total de la composition ;

(f) éventuellement au moins un inhibiteur de réticulation (VI),
(h) éventuellement au moins un additif de coloration (VII), et
(i) éventuellement au moins un additif (VIII) pour améliorer la résistance au feu.

Conformément au procédé selon l'invention, la quantité de carbonate de calcium du système additif (B) est comprise entre 10 et 24 % en poids par rapport au poids total de la composition.

Le choix de ces intervalles spécifiques est un des critères déterminant quand à la résolution du problème visant à améliorer les propriétés de résistance au peignage et à la déchirure.

Un autre critère important, est la présence de la résine polyorganosiloxane (V) dans le système additif (B) présente jusqu'à 60 % en poids, de préférence jusqu'à 40 % en poids, de préférence entre 11 et 30 % en poids et encore plus préférentiellement à raison de 15 à 30 % en poids, par rapport au poids total de la composition.

Nous avons aussi découvert que pour obtenir un effet optimal, il suffit de mettre en oeuvre le procédé selon l'invention avec un système additif (B) comprenant 5 à 30 %, de préférence entre 15 et 25 % en poids de résine polyorganosiloxanne (V) et 10 à 24% en poids de carbonate de calcium par rapport au poids total de la composition.

La résine (V) comporte de préférence au moins un reste alcényle dans sa structure. Selon un mode préféré, la résine polyorganosiloxane (V) comprend des motifs siloxyles Q de formule $SiO_{4/2}$.

Selon un autre mode particulier, la résine polyorganosiloxane (V) comporte dans sa structure de 0,1 à 20 % en poids de groupe(s) alcényle(s), de préférence supérieur à 4% en poids, ladite structure présentant des motifs siloxyles de type M, identique ou différent, des motifs siloxyles de type(s) T, identiques ou différents, et/ou Q et éventuellement des motifs siloxyles de type D.

De manière particulièrement préférée, la résine polyorganosiloxane (V) comprend au moins 2 % en poids, et de préférence au moins 5 % en poids de motifs siloxyles de type Q.

Ces résines (V) sont des oligomères ou polymères organopolysiloxanes ramifiés bien connus et disponibles dans le commerce. Elles se présentent sous la forme de solutions, de préférence siloxaniques. Elles présentent, dans leur structure, au moins deux motifs différents choisis parmi ceux de formule $R_3SiO_{0,5}$ (motif M), $R_2SiO$ (motif D), $RSiO_{1,5}$ (motif T) et $SiO_2$ (motif Q), l'un au moins de ces motifs étant un motif T ou Q.

Les radicaux R sont identiques ou différents et sont choisis parmi les radicaux alkyles linéaires ou ramifiés en $C_1$- $C_6$, les radicaux alcényles en $C_2$-$C_4$ phényle, trifluoro-3,3,3 propyle. On peut citer par exemple : comme radicaux R alkyles, les radicaux méthyle, éthyle, isopropyle, tertiobutyle et n-hexyle, et comme radicaux R alcényles, les radicaux vinyles.

On doit comprendre que dans les résines (V) du type précité, une partie des radicaux R sont des radicaux alcényles.

Comme exemples d'oligomères ou de polymères organopolysiloxanes ramifiés on peut citer les résines MQ, les résines MDQ, les résines TD et les résines MDT, les fonctions alcényles pouvant être portées par les motifs M, D et/ou T. Comme exemple de résines qui conviennent particulièrement bien, on peut citer les résines MDQ vinylées ayant une teneur pondérale en groupe vinyle comprise entre 0,2 et 10 % en poids.

Sans que cela ne soit limitatif, il peut être considéré que le promoteur d'adhérence (IV) comporte exclusivement :

- (IV.1) au moins un organosilane alcoxylé contenant, par molécule, au moins un groupe alcényle en $C_2$ - $C_6$,
- (IV.2) au moins un composé organosilicié comprenant au moins un radical époxy, et
- (IV.3) au moins un chélate de métal M et/ou un alcoxyde métallique de formule générale : M(OJ)n, avec n = valence de M et J = alkyle linéaire ou ramifié en $C_1$ - $C_8$, M étant choisi dans le groupe formé par : Ti, Zr, Ge, Li, Mn, Fe, Al et Mg.

Conformément à une disposition préférée de l'invention, l'organosilane alcoxylé (IV.1) du promoteur (IV) et sélectionné parmi les produits de formule générale suivante :

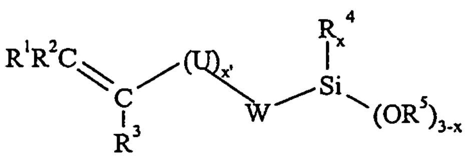

(IV.1)

formule dans laquelle :

- $R^1$, $R^2$, $R^3$ sont des radicaux hydrogénés ou hydrocarbonés identiques ou différents entre eux et représentent

l'hydrogène, un alkyle linéaire ou ramifié en $C_1$-$C_4$ ou un phényle éventuellement substitué par au moins un alkyle en $C_1$-$C_3$,

- U est un alkylène linéaire ou ramifié en $C_1$ - $C_4$,
- W est un lien valentiel,
- $R^4$ et $R^5$ sont des radicaux identiques ou différents et représentent un alkyle en $C_1$-$C_4$ linéaire ou ramifié,
- x' = 0 ou1, et
- x = 0 à 2.

Sans que cela soit limitatif, il peut être considéré que le vinyltriméthoxysilane est un composé (IV.1) particulièrement approprié.

S'agissant du composé organosilicié (IV.2), il est prévu conformément à l'invention, de le choisir:

a) soit parmi les produits (IV.2a) répondant à la formule générale suivante :

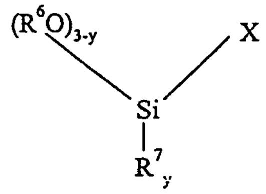

(IV.2a)

formule dans laquelle :

- $R^6$ est un radical alkyle linéaire ou ramifié en C1 - C4,
- $R^7$ est un radical alkyle linéaire ou ramifié,
- y est égal à 0, 1, 2 ou 3, et
- X étant défini par la formule suivante :

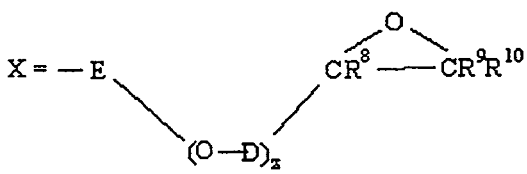

avec :

- E et D qui sont des radicaux identiques ou différents choisis parmi les alkyles en C1-C4 linéaires ou ramifiés,
- z qui est égal à 0 ou 1,
- $R^8$, $R^9$, $R^{10}$ qui sont des radicaux identiques ou différents représentant l'hydrogène ou un alkyle linéaire ou ramifié en $C_1$-$C_4$, et
- $R^8$ et $R^9$ ou $R^{10}$ pouvant alternativement constituer ensemble et avec les deux carbones porteurs de l'époxy, un cycle alkyle ayant de 5 à 7 chaînons,

  ou

b) soit parmi les produits (IV.2b) constitués par des polydiorganosiloxanes époxyfonctionnels comportant :

(i) au moins un motif siloxyle de formule :

$$X_p G_q SiO_{\frac{4-(p+q)}{2}}$$

(IV.2 b1)

formule dans laquelle :

- X est le radical tel que défini ci-dessus pour la formule (IV.2 a)
- G est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- p = 1 ou 2,
- q = 0, 1 ou 2,
- p + q = 1, 2 ou 3. et

et (2i) éventuellement au moins un motif siloxyle de formule :

$$G_r SiO_{\frac{4-r}{2}}$$

(IV.2 b2)

formule dans laquelle G a la même signification que ci-dessus et r est égale à 0, 1, 2 ou 3.

En ce qui concerne le dernier composé (IV.3) du promoteur d'adhérence (IV) de la composition silicone selon l'invention, les produits préférés sont ceux dont le métal M du chélate et/ou de l'alcoxyde (IV.3) est choisi dans la liste suivante : Ti, Zr, Ge, Li ou Mn. Il est à souligner que le titane est plus particulièrement préféré. On peut lui associer, par exemple, un radical alkoxy de type butoxy.
Le promoteur d'adhérence (IV) pourra être formé de :

- (IV.1) seul
- (IV.2) seul
- (IV.1) + (IV.2)

selon deux modalités préférées :

- (IV.1) + (IV.3)
- (IV.2) + (IV.3)

et enfin selon la modalité la plus préférée : (IV.1) + (IV.2) + (IV.3).

Selon l'invention, une combinaison avantageuse pour former le promoteur d'adhérence est la suivante :

- vinyltriméthoxysilane (VTMO), 3-glycidoxypropyltriméthoxysilane (GLYMO) et titanate de butyle.

Sur le plan quantitatif, il peut être précisé que les proportions pondérales entre (IV.1), (IV.2) et (IV.3), exprimées en pourcentages en poids par rapport au total des trois, sont les suivantes :

- (IV.1) ≥ 10 %, de préférence compris entre 15 et 70 % et plus préférentiellement encore entre 25 à 65 %,
- (IV.2) ≤ 90 %, de préférence compris entre 70 et 15 % et plus préférentiellement encore entre 65 à 25 %, et
- (IV.3) ≥ 1 %, de préférence compris entre 5 et 25 % et plus préférentiellement encore entre 8 à 18 %,

étant entendu que la somme de ces proportions en (IV.1), (IV.2) et (IV.3) est égale à 100 %.

Pour de meilleures propriétés d'adhésion, le ratio pondéral (IV.2) : (IV.1) est de préférence compris entre 2 : 1 et 0,5 : 1, le ratio 1 : 1 étant plus particulièrement préféré.

Avantageusement, le promoteur d'adhérence (IV) est présent à raison de 0,1 à 10, de préférence 0,5 à 5 et plus préférentiellement encore 1 à 3 % en poids par rapport à l'ensemble des constituantes de la composition (A) .

Le polyorganosiloxane (I) est l'un des constituants essentiel de la composition (A) pour le mode de réticulation par des réactions de polyaddition. Avantageusement, Il s'agit d'un produit comportant :

(i) des motifs siloxyles de formule :

$$R^1_a Z_b SiO_{\frac{4-(a+b)}{2}} \quad \text{(I-1)}$$

dans laquelle :

- les symboles $R^1$, un groupe alcényle, de préférence vinyle ou allyle,
- les symboles Z, identiques ou différents, représentent chacun un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 ou 2 et la somme a + b est égale à 1, 2 ou 3, et éventuellement

(ii) des autres motifs siloxyles de formule :

$$Zc\ SiO_{\frac{4-c}{2}} \quad \text{(I-2)}$$

dans laquelle :

- Z a la même signification que ci-dessus et c est 0, 1, 2 ou 3.

Ce polydiorganosiloxane (I) pourra avoir une viscosité au moins égale à 200 mPa.s et de préférence inférieure à 200.000 mPa.s.

Toutes les viscosités dont il est question dans le présent mémoire correspondent à une grandeur de viscosité dynamique qui est mesurée, de manière connue en soi, à 25°C.

Le polyorganosiloxane (I) peut être uniquement formé de motifs de formule (I-1) ou peut contenir, en outre, des motifs de formule (I-2). De même, il peut présenter une structure linéaire ramifiée cyclique ou en réseau. Z est généralement choisi parmi les radicaux méthyle, éthyle et phényle, 60 % molaire (ou en nombre) au moins des radicaux Z étant des radicaux méthyle. Des exemples de motifs siloxyles de formule (I-1) sont les motifs vinyldiméthylsiloxyle, vinylphénylméthylsiloxyle, vinylméthylsiloxyle et vinylsiloxyle.

Des exemples de motifs siloxyles de formule (I-2) sont les motifs $SiO_{4/2}$, diméthylsiloxyle, méthylphénylsiloxyle, diphénylsiloxyle, méthylsiloxyle et phénylsiloxyle. Des exemples de polyorganosiloxanes (I) sont des composés linéaires et cycliques comme : les diméthylpolysiloxanes à extrémités diméthylvinylsilyles, les copolymères (méthylvinyl) (diméthyl) polysiloxanes à extrémités triméthylsilyles, les copolymères (méthylvinyl) (diméthyl) polysiloxanes à extrémités diméthylvinylsilyles et les méthylvinylpolysiloxanes cycliques.

Avantageusement, le polyorganosiloxane (II) comporte des motifs siloxyle de formule :

$$H_d L_e SiO_{\frac{4-(d+e)}{2}} \quad \text{(II-1)}$$

dans laquelle :

- les groupes L, identiques ou différents, représentent chacun un groupe hydrocarboné monovalent, exempt d'action défavorable sur l'activité du catalyseur et choisi, de préférence, un groupe alkyle ayant de 1 à 8 atomes de carbone inclus, éventuellement substitué par au moins un atome d'halogène, avantageusement, parmi les groupes méthyle, éthyle, propyle et 3,3,3-trifluoropropyle, un groupes aryle et, avantageusement, un radical xylyle, tolyle ou phényle,

  - d est 1 ou 2, e est 0, 1 ou 2, la somme d + e est égale à 1, 2 ou 3, et
  - éventuellement, au moins une partie des autres motifs étant des motifs de formule moyenne :

$$L_g SiO_{\frac{4-g}{2}}$$

(II-2)

dans laquelle les groupements L ont la même signification que ci-dessus et g est égal à 0, 1, 2 ou 3.
La viscosité dynamique de ce polyorganosiloxane (II) est au moins égale à 10 mPa.s et, de préférence elle est comprise entre 20 et 1000 mPa.s. Le polyorganosiloxane (II) peut être uniquement formé de motifs de formule (II-1) ou comporter en plus des motifs de formule (II-2). Le polyorganosiloxane (II) peut présenter une structure linéaire ramifiée cyclique ou en réseau. Le groupe L a la même signification que le groupe Z ci-dessus. Des exemples de motifs de formule (II-1) sont $H(CH_3)_2SiO_{1/2}$, $HCH_3SiO_{2/2}$ et $H(C_6H_5)SiO_{2/2}$.

Les exemples de motifs de formule (II-2) sont les mêmes que ceux donnés plus haut pour les motifs de formule (I-2).

Des exemples de polyorganosiloxane (II) sont des composés linéaires et cycliques comme :

- les diméthylpolysiloxanes à extrémités hydrogénodiméthylsilyle,
- les copolymères à motifs (diméthyl) (hydrogénométhyl) polysiloxanes à extrémités triméthylsilyles,
- les copolymères à motifs (diméthyl) (hydrogénométhyl) polysiloxanes à extrémités hydrogénodiméthylsilyles,
- les hydrogénométhylpolysiloxanes à extrémités triméthylsilyles,
- les hydrogénométhylpolysiloxanes cycliques.

Le composé (II) peut éventuellement être un mélange d'un diméthylpolysiloxane à extrémités hydrogénodiméthylsilyle et d'un polyorganosiloxane porteur d'au moins 3 fonctions SiH (hydrogénosiloxyle).

Le rapport du nombre d'atomes d'hydrogène liés au silicium dans le polyorganosiloxane (II) sur le nombre total de groupes à insaturation alcényle du polyorganosiloxane (I) et de la résine (V) est compris entre 0,4 et 10, de préférence entre 0,6 et 5.

Les bases de compositions silicones de polyaddition peuvent ne comporter que des polyorganosiloxane (I) et (II) linéaires comme, par exemple, celles décrites dans les brevets : US-A-3 220 972, US-A-3 697 473 et US-A-4 340 709 ou comporter à la fois des polyorganosiloxane (I) et (II) ramifiés ou en réseau, comme par exemple celles décrites dans les brevets : US-A-3 284 406 et US-A-3 434 366.

Selon un mode de réalisation particulier, on met en oeuvre :

- au moins un polyorganosiloxane (I) linéaire comportant des chaînes formées de motifs de formule (I-2) où c = 2, bloquées à chacune de leurs extrémités par des motifs de formule (I-1) où a = 1 et b = 2, et
- au moins un polyorganosiloxane (II) linéaire comportant dans sa structure au moins trois atomes d'hydrogène liés au silicium, situés dans les chaînes et/ou en bouts de chaînes ;

et plus particulièrement encore :

- au moins un polyorganosiloxane (I) linéaire comportant des chaînes formées de motifs de formule (I-2) où c = 2, bloquées à chacune de leurs extrémités par des motifs de formule (I-1) où a = 1 et b = 2, et
- au moins un polyorganosiloxane (I) linéaire comportant des chaînes formées de motifs de formule (II-1) où d = 1 et e = 1 et éventuellement de motifs de formule (II-2) où g = 2, bloquées à chacune de leurs extrémités par des motifs de formule (II-1) où d = 1 et e = 2.

Les catalyseurs (III) sont également bien connus. Les métaux du groupe du platine sont ceux connus sous le nom de platinoïdes, appellation qui regroupe, outre le platine, le ruthénium, le rhodium, le palladium, l'osmium et l'iridium. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593,
US-A-3 715 334, US-A-3 377 432 et US-A-3 814 730. Le catalyseur généralement préféré est le platine. Dans ce cas, la quantité pondérale de catalyseur (III), calculée en poids de platine-métal, est généralement comprise entre 2 et 400 ppm, de préférence entre 5 et 200 ppm basés sur le poids total des polyorganosiloxanes (I) et (II).

Avantageusement, le procédé selon l'invention met en oeuvre une composition silicone (A) comprenant au moins un ralentisseur (VI) de la réaction d'addition (inhibiteur de réticulation), et est choisi parmi les composés suivants :

- les polyorganosiloxanes substitués par au moins un alcényle pouvant se présenter éventuellement sous forme cyclique, le tétraméthylvinyl-tétrasiloxane étant particulièrement préféré,
- la pyridine,
- les phosphines et les phosphites organiques,
- les amides insaturés,
- les maléates alkylés, et
- les alcools acétyiéniques.

Ces alcools acétyléniques, (Cf. FR-B-1 528 464 et FR-A-2 372 874), qui font partie des bloqueurs thermiques de réaction d'hydrosilylation préférés, ont pour formule :

$$(R')(R'')C(OH)-C \equiv CH$$

formule dans laquelle,

- R' est un radical alkyle linéaire ou ramifié, ou un radical phényle ;
- R" est H ou un radical alkyle linéaire ou ramifié, ou un radical phényle ; les radicaux R', R" et l'atome de carbone situé en $\alpha$ de la triple liaison pouvant éventuellement former un cycle;

le nombre total d'atomes de carbone contenu dans R' et R" étant d'au moins 5, de préférence de 9 à 20.

Lesdits alcools sont, de préférence, choisis parmi ceux présentant un point d'ébullition supérieur à 250° C. On peut citer à titre d'exemples :

- l'éthynyl-1-cyclohexanol-1 (ECH);
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-2 butyne-3 ol-2 ;
- le méthyl-3 pentadécyne-1 ol-3.

Ces alcools $\alpha$-acétyléniques sont des produits du commerce.

Un tel ralentisseur (VI) est présent à raison de 3 000 ppm au maximum, de préférence à raison de 100 à 1000 ppm par rapport au poids total des organopolysiloxanes (1) et (II).

La présente invention concerne aussi la composition silicone d'enduction (A) réticulable par des réactions de polyaddition pour améliorer la résistance au peignage et la résistance à la déchirure d'un support fibreux tissé, tricoté, ou non tissé constituée par le mélange formé de :

(a) au moins un polyorganosiloxane (I) présentant, par molécule, au moins deux groupes alcényles, en C2-C6 liés au silicium,
(b) au moins un polyorganosiloxane (II) présentant, par molécule, au moins deux atomes d'hydrogène liés au silicium,
(c) une quantité catalytiquement efficace d'au moins un catalyseur (III), composé d'au moins un métal appartenant au groupe du platine,
(d) au moins un promoteur d'adhérence (IV),
(e) d'un système additif (B) améliorant la résistance au peignage et la résistance à la déchirure, dont les constituants sont additionnés séquentiellement ou simultanément au mélange, constitué par le mélange de:

- au moins une résine polyorganosiloxane (V) présente jusqu'à 60 % en poids par rapport au poids total de la composition et éventuellement mélangée à au moins un polyorganosiloxane servant de diluant, et
- du carbonate de calcium ($CaCO_3$) dont la quantité est comprise entre 10 et 24% en poids par rapport au poids total de la composition;

(f) éventuellement au moins un inhibiteur de réticulation (VI),
(h) éventuellement au moins un additif de coloration (VII), et
(i) éventuellement au moins un additif (VIII) pour améliorer la résistance au feu.

Comme additif (VIII) pour améliorer la résistance au feu, on peut citer par exemple des composés à groupement phényle substitué par un groupement amino (secondaire ou tertiaire). Des exemples de tels additifs se trouvent dans

la référence US 5,516,938. Les quantités utiles de tels additifs sont généralement comprisent entre 0.01 et 1 partie en poids par rapport à la quantité totale de la composition.

Les autres constituants de cette composition (A) sont tels que définis dans le procédé selon l'invention.

Selon un autre de ses aspects, la présente invention est relative à un système précurseur {bicomposant (C)} de la composition silicone décrite supra. Un tel système précurseur se présente en deux parties A et B distinctes, destinées à être mélangées pour former la composition, l'une de ces parties A ou B comprenant le catalyseur (III) et une seule espèce (I) ou (II) de polyorganosiloxane.

Une autre caractéristique encore de ce système précurseur (C) est que la résine (V) peut être mise en oeuvre dans la partie A ou la partie B ou dans les deux parties A et B, le catalyseur (III) ne devant pas être présent dans la partie A ou B contenant le polyorganosiloxane (II) et la résine (V).

Dans le cas du système promoteur (IV-1) (IV-2) (IV-3), une autre caractéristique de ce système précurseur est que sa partie A ou B contenant le polyorganosiloxane (II) est exempt de composés (IV-3) du promoteur (IV) et que sa partie A ou B incluant le composé (IV-1) du promoteur (IV) ne comprend pas le catalyseur (III).

La viscosité des parties A et B et de leur mélange ensemble peut être ajustée en jouant sur les quantités des constituants et en choisissant les polyorganosiloxanes de viscosités différentes.

Une fois mélangées l'une à l'autre les parties A et B forment une composition silicone prête à l'emploi, qui peut être appliquée sur le support par tout moyen d'enduction approprié (par exemple racle ou cylindre). On visera en général une épaisseur déposée finale après réticulation comprise entre 25 et 300 μm, notamment entre 50 et 200 μm. Il n'est pas nécessaire d'avoir une couche uniforme, car si la surface du support n'est pas régulière, il peut résulter un dépôt irrégulier. Les compositions selon l'invention sont réticulées par voie thermique et/ou par rayonnement électromagnétique (rayonnement d'électrons accélérés ou "électron beam").

Les compositions selon l'invention peuvent être utilisées pour le revêtement ou l'enduction de supports souples, notamment textiles fibreux tissés, tricotés ou non tissés, et, de préference de supports tissés, tricotés ou non tissés en fibres synthétiques, avantageusement en polyester ou en polyamide.

L'invention vise aussi un support fibreux tissé, tricoté, ou non tissé enduit sur une ou deux faces d'un élastomère susceptible d'être obtenu :

a)- par l'application d'au moins 10 g/m$^2$ sur une ou deux faces d'un support fibreux tissé, tricoté, ou non tissé de la composition silicone d'enduction (A) décrite ci-dessus ou de la composition résultant du mélange des parties A et B du système bicomposant (B) décrit ci-dessus, et

- la réticulation du dépôt formé à l'étape précédente pour former un élastomère par chauffage à une température pouvant atteindre 210°C ou par rayonnement électromagnétique, en particulier par rayonnement infra-rouge, ou

b) par le procédé selon l'invention décrit ci-dessus.

Selon un mode préféré de l'invention, le support fibreux est un tissu à contexture ouverte ayant une porosité > 10 l/dm$^2$/min suivant la norme ISO 9237.

Un autre aspect de l'invention concerne un sac gonflable pour la protection d'un occupant de véhicule, formé à partir d'un support enduit selon le mode opératoire de l'invention décrit ci-dessus.

L'invention concerne aussi l'utilisation du système bicomposant (B) selon l'invention, d'une composition silicone d'enduction (A) réticulable selon l'invention pour l'enduction de support fibreux tissé, tricoté, ou non tissé. D'une manière préférentielle, ces supports sont destinés à former des sacs gonflables pour la protection d'occupants de véhicules. Dans un mode de réalisation préféré, le support est un tissu à contexture ouverte ayant une porosité > 10 l/dm$^2$/min suivant la norme ISO 9237.

Le revêtement ou l'enduction d'au moins une des faces du matériau support souple notamment textile (tissu en polyamide par exemple) est utile pour la fabrication de tissus techniques tels que notamment les sacs gonflables pour la protection individuelle d'occupants de véhicules, en cas de choc, les toiles de tente, toiles de parachute et analogues.

Dans ce contexte, les compositions ou le procédé selon l'invention se révèlent remarquables non seulement pour l'enduction de supports classiquement utilisés notamment dans la fabrication des sacs gonflables, mais aussi pour l'enduction de supports à contexture ouverte. Par support à contexture ouverte, on entend les supports de porosité > 10 l/dm$^2$ /min selon la norme ISO 9237. Dans le cas d'un tissu, on peut notamment définir la contexture ouverte comme correspondant à un nombre de fils de chaîne et de trame par centimètre dont la somme est inférieure ou égale à 36.

Comme tissus particulièrement recommandés dans le cadre de la présente invention, on citera de manière générale les tissus dont le poids à l'état non enduit est inférieur à 200 g/m$^2$ et notamment inférieure ou égal à 160 g/m$^2$. On peut ainsi citer de tels tissus, notamment en polyamide, ayant de 16 x 16 à 18 x 18 fils/cm, par exemple les tissus de 470 dtex (decitex) ayant ces caractéristiques.

On notera que l'on pourra aussi utiliser des substrats, notamment tissus, formés de fibres textiles techniques, c'est-à-dire de fibres textiles présentant des propriétés améliorées par rapport aux fibres classiques, par exemple ténacité accrue, afin de conférer des propriétés particulières ou renforcées en fonction des applications du support ou tissu enduit. Pour l'enduction de supports à contexture ouverte, il est préférable de mettre en oeuvre des compositions comprenant l'huile (I) de viscosité comprise entre 10.000 et 200.000 mPa.s, notamment entre 30.000 et 170.000, en particulier entre 40.000 et 120.000, et la résine (V) comprenant des motifs Q, notamment au moins 2 % en poids de tels motifs, de préférence au moins 5 % et en particulier de 5 % à 12 %.

L'invention a donc aussi pour objet un tel support souple, notamment textile, enduit conformément à l'invention et pouvant donc présenter les caractéristiques et propriétés indiquées plus haut.

Grâce aux propriétés et caractéristiques indiquées avant, on peut réaliser des sacs gonflables de protection individuelle des occupants d'un véhicule à partir de tissus à contexture ouverte comme décrits ci-dessus, en particulier en tissu de polyamide ou de polyester, qui une fois enduits, ont une bonne résistance au peignage et à la déchirure, un poids inférieur ou égal à 200 g/m$^2$, et possédant par ailleurs des propriétés optimales notamment d'imperméabilité, de protection thermique, de porosité et de pliabilité. Cela permet de réaliser des sacs gonflables plus légers à épaisseur d'enduction égale, plus performants et moins coûteux que les sacs réalisés à partir des tissus enduits de l'art antérieur. On peut aussi, à poids égal, augmenter l'épaisseur d'enduction et améliorer l'imperméabilité et la protection thermique. De manière générale, l'enduction dont il s'agit ici peut correspondre au dépôt d'une couche unique sur au moins une des faces du matériau support souple (enduction primaire). Mais il peut s'agir encore du dépôt d'une seconde couche ou éventuellement d'une troisième couche sur au moins une des faces du matériau support déjà enduit (enduction secondaire) pour avoir au total l'épaisseur voulue garantissant les meilleures performances possibles en matière d'imperméabilité et les caractéristiques de toucher favorables.

Les exemples, qui suivent, de préparation de compositions et de leur application comme revêtement de tissu en polyamide selon le procédé de l'invention, permettront de mieux comprendre l'invention et de faire ressortir ses avantages et ses variantes de réalisation. Les performances des produits résultant du procédé selon l'invention seront mises en exergue par des tests comparatifs.

**EXEMPLES**

Dans ces exemples, la viscosité est mesurée à l'aide d'un viscosimètre BROOKFIELD selon les indications de la norme AFNOR NFT-76-106 de mai 82.

Exemple 1:

1) Définition des constituants :

- Polyorganosiloxane **(I)** : huile polydiméthylsiloxane bloquée à chacune des extrémités des chaînes par un motif $(CH_3)_2ViSiO_{0,5}$, ayant une viscosité de 100000 mPa.s et contenant 0,003 fonction Si-Vi pour 100 g d'huile [constituant dénommé ci-après huile (I) de haute viscosité ;
- Polyorganosiloxane **(I-a)** une huile polydiméthylsiloxane bloquée à chacune des extrémités des chaînes par un motif $(CH_3)_2ViSiO_{0,5}$, ayant une viscosité de 10000 mPa.s et contenant 0,005 reste Si-Vi pour 100 g d'huile [constituant dénommé ci-après huile (I) de basse viscosité] ;
- Polyorganosiloxane, dénommé ci-dessous diluant **(A)**, une huile polydiméthylsiloxane bloquée à chacune des extrémités des chaînes par un motif $(CH_3)_2ViSiO_{0,5}$, ayant une viscosité de 60000 mPa.s
- Polyorganosiloxane, dénommé ci-dessous diluant **(B)**, une huile polydiméthylsiloxane bloquée à chacune des extrémités des chaînes par un motif $(CH_3)_2ViSiO_{0,5}$, ayant une viscosité de 3500 mPa.s
- Polyorganosiloxane **(II)** : huile poly(diméthyl) (hydrogénométhyl) siloxane bloquée à chacune des extrémités des chaînes par un motif $(CH_3)_2HSiO_{0,5}$, ayant une viscosité de 25 mPa.s et contenant au total 0,7 fonction Si-H pour 100 g d'huile (dont 0,6 fonction Si-H situé dans la chaîne) [constituant dénommé ci-après huile (II)] ;
- Catalyseur **(III)** : platine métal, introduit sous la forme d'un complexe organométallique à 10 % en poids de platine métal, connu sous le nom de catalyseur de Karstedt [constituant dénommé ci-après platine du catalyseur (III)];
- Promoteurs d'adhérences (IV), mélange composé de :
  - **(IV-1)** vinyltriméthoxysilane (VTMO),
  - **(IV-2)** glycidoxypropyltriméthoxysilane (GLYMO), et
  - **(IV-3)** titanate de butyle $Ti(OBu)_4$ (TBT) ;

- Résine **(V) :** polyorganosiloxane de formule $MM^{Vi}OD^{Vi}Q$ contenant 0,8 % en poids de groupes vinyles (Vi) et constituée de 27% en poids de motifs $(CH_3)_3SiO_{0,5}$ , 0.15 % en poids de motifs $(CH_3)_2ViSiO_{0,5}$, 60% en poids de motifs $(CH_3)_2SiO$, 2,4 % en poids de motifs $(CH_3)ViSiO$ et 9.6 % en poids de motifs $SiO_2$.
- Inhibiteur **(VI) :** éthynyl-1-cyclohexanol-1 (ECH);
- Carbonate de calcium **(1)** : $CaCO_3$, (Albacar© 5970), carbonate de calcium précipité, diamètre équivalent moyen 2 μm et de forme aciculaire.
- Carbonate de calcium **(2)** : $CaCO_3$, (Socal© 31 vendu par la société Solvay), - Carbonate de calcium diamètre équivalent moyen 0,07 μm.
- Carbonate de calcium (3) : $CaCO_3$, (BLR3© vendu par la société Omya), diamètre équivalent moyen 5,7 μm.
- Charge (VII-C) : quartz broyé ayant une granulométrie moyenne de l'ordre de 2,5 μm et développant une surface BET de l'ordre de 3 $m^2/g$, commercialisé par la société SI FRACO.
- Charge (VII-d) : Silice AEROSIL® R 812 ;

2) Préparation des compositions :

a) Préparation d'une composition à partir d'un précurseur bicomposant:
Une composition est obtenu par mélange, à température ambiante, de 100 parties en poids d'une partie A et de 10 parties en poids d'une partie B d'un système bicomposant (bicomposant I ou II, voir compositions dans les Tableaux I à IV).
b) le mélange est enduit (poids déposé environ 30 à 36 $g/m^2$) pour former une couche à l'aide de racles ou de cylindres sur un tissu polyhexaméthylèneadipamide de type 6.6 (polyamide-6.6) désencollé de titre 235 décitex (dtex) et ayant une contexture de 28,5 x 28,5 fils/cm (pour les compositions des tableaux 1 et 2 les tests sont effectués avec des lots de tissus différents), et
c) la couche résultante est réticulée pendant 80 secondes à 180° C dans un four MATHIS pour obtenir un élastomère. Les résultats des tests sont consignés dans le Tableaux V et VI

Les compositions I-2 à I-8 sont des compositions selon l'invention. Les compositions I-1, C-1, C-2, C-3 et C-4 sont des comparatifs.

**Tableau I Composition du système bi-composant I**

| Compositions | C1 | I-1 | I-2 | I-3 | C-2 | C-3 |
|---|---|---|---|---|---|---|
| Partie A | | | | | | |
| Nombre de partie en poids | | | | | | |
| Composition à 40% en poids de résine **(V)** et 60 % en poids de diluant (A) | 47.7 | 47.7 | 47.7 | 47.7 | 40 | 47.7 |
| Charge **(VII-C)** | 0 | 0 | 0 | 0 | 32 | 16 |
| Huile (I) de basse viscosité | 0 | 0 | 0 | 0 | 7 | 3.5 |
| Huile (I) de haute viscosité | 45 | 40 | 27 | 19 | 13 | 29 |
| Carbonate de calcium (1) albacar© 5970 | 0 | 5 | 16 | 24 | 0 | 0 |
| Huile (II) | 6 | 6 | 6 | 6 | 6 | 6 |
| VTMO | 1 | 1 | 1 | 1 | 1 | 1 |
| GLYMO | 1 | 1 | 1 | 1 | 1 | 1 |
| Partie B | | | | | | |
| Composition à 40% en poids de résine (V) et 60 % en poids de diluant (A) | 45 | 45 | 45 | 45 | 45 | 45 |
| Huile (I) de haute viscosité | 51 | 51 | 51 | 51 | 51 | 51 |
| TBT | 4 | 4 | 4 | 4 | 4 | 4 |
| Catalyseur (III) | 0,02 | 0,02 | 0,02 | 0,02 | 0,02 | 0,02 |

(suite)

| Compositions | C1 | I-1 | I-2 | I-3 | C-2 | C-3 |
|---|---|---|---|---|---|---|
| Test dureté Shore A de l'élastomère obtenu à partir de 100 parties en A et de 10 parties en B, suivi d'une réticulation à 150°C pendant 10mn | 33 | 36 | 1 42 | 52 | 52 | 40 |

Après mélange de 100 parties en poids de la partie A et de 10 parties en poids de la partie B du système bicomposant décrit dans le Tableau I, les teneurs en poids en carbonate de calcium et en résine **(V)** des compositions résultantes sont consignées dans le Tableau II :

**Tableau II**

| Compositions | I-1 | I-2 | I-3 |
|---|---|---|---|
| Carbonate de calcium **(1)** albacar© 5970 % en poids par rapport au poids total de la composition | 4,5 | 14,7 | 22,1 |
| Résine **(V)** % en poids par rapport au poids total de la composition | 18,8 | 19,2 | 19,2 |

**Tableau III : Composition du système bi-composant II**

| Compositions | C4 | I-4 | I-5 | I-6 | I-7 | I-8 |
|---|---|---|---|---|---|---|
| Partie A (en poids) | | | | | | |
| Composition à 40% en poids de résine **(V)** et 60 % en poids de diluant (A) | 0 | 46 | 25,2 | 46,0 | 46,0 | 46,0 |
| Huile **(I)** de basse viscosité | 60,1 | | | | | |
| Huile **(I)** de haute viscosité | 29,85 | 29,85 | 52,15 | 29,85 | 29,85 | 29,85 |
| Carbonate de calcium **(1)** Albacar© 5970 | | 16,10 | 16,10 | | | |
| Carbonate de calcium **(2) :** Socal© 31 | | | | | | 8,0 |
| Carbonate de calcium **(3) :** BLR3© | | | | 16,1 | 14,1 | 8,1 |
| Charge **(VII-d)** Silice AEROSIL® R 812 | 5 | | | | 2,0 | |
| ECH **(VI)** | 0,025 | 0,025 | 0,025 | 0,025 | 0,025 | 0,025 |
| Huile **(II)** | 3,0 | 6 | 4,5 | 6 | 6 | 6 |
| VTMO | 1 | 1 | 1 | 1 | 1 | 1 |
| GLYMO | 1 | 1 | 1 | 1 | 1 | 1 |
| **Partie B (en poids)** | | | | | | |
| Composition à 40% en poids de résine **(V)** et 60 % en poids de diluant **(A)** | 0 | 44,8 | 0 | 44,8 | 44,8 | 44,8 |
| Huile **(I)** de haute viscosité | 51 | 51 | 51 | 51 | 51 | 51 |
| Huile **(1)** de basse viscosité | 44,8 | | 44,8 | | | |
| TBT | 4 | 4 | 4 | 4 | 4 | 4 |
| Catalyseur **(III)** | 0,02 | 0,02 | 0,02 | 0,02 | 0,02 | 0,02 |
| Test dureté Shore A de l'élastomère obtenu à partir de 100 parties en A et de 10 parties en B, suivi d'une réticulation à 150°C pendant 10mn | Non mesuré | 45 | 28 | 39 | 43 | 41,5 |

Après mélange de 100 parties en poids de la partie A et de 10 parties en poids de la partie B du système bicomposant II décrit dans le Tableau III, les teneurs en poids en carbonate de calcium et en résine **(V)** dés compositions

résultantes sont consignées dans le Tableau IV.

**Tableau IV**

| Compositions | I-4 | I-5 | I-6 | 1-7 | I-8 |
|---|---|---|---|---|---|
| $CaCO_3$ **(1)** Albacar© 5970 % en poids par rapport au poids total de la composition | 14,6 | 14,6 | | | |
| Carbonate de calcium **(2) :** Socal© 31 % en poids par rapport au poids total de la composition | | | | | 7.3 |
| Carbonate de calcium **(3) :** BLR3© % en poids par rapport au poids total de la composition | | | 14,6 | 12,8 | 7,4 |
| Résine **(V)** % en poids par rapport au poids total de la composition | 18,4 | 9,2 | 18,4 | 18,4 | 18,4 |
| Charge **(VII-d)** Silice AEROSIL® R 812 | | | | 1,8 | |

**Tableau V :** Résultats avec tissu PA-6,6 , lot n° 1 (235 dtex , 28,5 x 28,5 fils/cm, systéme bi-composant **I)**

| Compositions | C1 | I-1 | I-2 | I-3 | C-2 | C-3 |
|---|---|---|---|---|---|---|
| Résistance au peignage (N) (Chaîne / Trame) | 525 / 523 | 580 / 560 | 730 / 693 | 840 /820 | 700 / 650 | 650 / 630 |
| Amélioration (%) par rapport à la composition référence C1 | 0 | 10.48 | 35.78 | 60 | 33 | 23.81 |
| Résistance à la déchirure (N) | 189 | 150 | 142 | 121 | 75 | 85 |
| Résistance à l'abrasion (test scrub en cycles) | >1000 | > 1000 | >1000 | >1000 | 500 | 800 |

**Tableau VI :** Résultats avec tissu PA-6,6 lot n° 2 (235 dtex , 28,5 x 28,5 fils/cm, système bi-composant II)

| Compositions | C4 | 1-4 | I-5 | I-6 | I-7 | I-8 |
|---|---|---|---|---|---|---|
| Résistance au peignage (N) (Chaîne) | 570 | 871 | 749 | 721 | 806 | 798 |
| Résistance à la déchirure (N) | 147 | 116 | 131 | 102 | 94 | 99 |
| Résistance à l'abrasion (test scrub en cycles) | >1000 | > 1000 | >1000 | >1000 | >1000 | >1000 |

(1) Le test de résistance au froissement et à l'abrasion (test "scrub") (norme ISO 5981 A) reflète l'adhérence et la tenue au vieillissement de la composition. Ce test consiste à soumettre le tissu, d'une part, à un mouvement de cisaillement à l'aide de deux mâchoires pinçant les deux bords opposés d'une éprouvette et animées d'un mouvement alternatif l'une par rapport à l'autre et, d'autre part, à une abrasion par contact avec un support mobile.
(2) Les mesures de résistance au peignage sont réalisées selon les indications de la norme ASTM D 6479.
(3) Les mesures de résistance à la déchirure sont réalisées selon le protocole suivant la norme ISO 13937-2.

Les meilleurs résultats sont obtenues lorsque le carbonate de calcium utilisé en association avec la résine (V) est l'Albacar© 5970, c'est-à-dire un carbonate de calcium de diamètre équivalent moyen de 2 $\mu$m et de forme aciculaire.

Exemple 2 :

Pour les compositions C1 (Comparatif) et I-2 (Invention), le mode opératoire décrit dans l'Exemple 1, paragraphes 2 a) à c) est répété pour des tissus de type polyhexaméthylèneadipamide de type 6.6 (PA-6,6) représentatifs du marché avec différentes conditions de réticulations de l'élastomères. Les résultats sont consignés dans le Tableau VII.

**Tableau VII**

| Tissu | Contexture (Chaine/ Trame) Nombre fil/cm | Conditions de réticulations | Résistance au peignage avec élastomère issu de la composition C1 (N) | | Résistance au peignage avec élastomère issu de la composition I-2 (N) | | % variance (gain) |
|---|---|---|---|---|---|---|---|
| Dtex | | °C/s | Chaine | Trame | Chaine | Trame | |
| 235 | 28.5 x 28.5 | 180 -80 | 525 | 523 | 730 | 693 | + 36 |
| 350 | 23 x 24 | 180-80 | 679 | 624 | 850 | 724 | +20 |
| 350 | 23 x 24 | 180 - 30 | 650 | 627 | 857 | 780 | +28 |
| 350 | 23 x 24 | 200 - 30 | 692 | 625 | 869 | 845 | +30 |
| 580 | 17 x17 | 180 - 80 | 452 | 469 | 550 | 506 | +14 |
| 580 | 17 x17 | 180 - 30 | 482 | 433 | 588 | 548 | +24 |
| 580 | 17 x17 | 200- 30 | 443 | 403 | 568 | 540 | +31 |
| 580 | 16 x16 | 180-80 | 373 | 419 | 526 | 515 | +31 |
| 580 | 16 x16 | 180 -30 | 365 | 358 | 454 | 454 | +26 |
| 580 | 16 x16 | 200-30 | 422 | 415 | 532 | 465 | +19 |

Le gain en résistance au peignage de la formule I-2 est significatif sur des tissus très variés avec des conditions de réticulations très différentes (temps et température).

Exemple 3

Composition témoin C-4 :

a) Une composition témoin C-4 est préparé en mélangeant 100 parties en poids d'une partie A et de 10 parties en poids d'une partie B d'un système bicomposant (voir composition ci-dessous).

| Compositions | C4 |
|---|---|
| Partie A : | |
| Nombre de partie en poids | |
| Composition à 25 % en poids de résine (V) et 75 % en poids de diluant (B) | 47.7 |
| Huile (I) de basse viscosité | 45.6 |
| CaC03 | 0 |
| Huile (II) | 6 |
| VTMO | 1 |
| GLYMO | 1 |
| Partie B : | |
| Composition à 40% en poids de résine (V) et 60 % en poids de diluant (A) | 45 |
| Huile (I) de haute viscosité | 51 |
| TBT | 4 |
| Catalyseur (III) | 0,02 |

b) On effectue un test comparatif entre les compositions I-2 (invention) et C-4 (comparatif) qui sont enduites sur des

tissus de contextures différentes (Tableau VIII). Pour cela, chaque composition est enduite, à l'aide d'une racle déposant une quantité d'environ 50 g/m$^2$, pour former une couche sur le tissu ; et

c) la couche résultante est réticulée pendant 80 secondes à 180° C dans une étuve ventilée pour obtenir un élastomère. Les résultats des tests sont consignés dans le Tableau IX.

**Tableau VIII :** Nature des supports testés

| | |
|---|---|
| Nature | Polyamide 6.6 |
| Poids en gr de 10 000 m de fil | 470 dTex |
| Contexture | 18 / 18 (18 fils en chaîne et trame par cm) |
| Nature | Polyamide 6.6 |
| Poids en gr de 10 000 m de fil | 470 dTex |
| Contexture | 16 / 16 (16 fils en chaîne et trame par cm) |
| Nature | Polyamide 6.6 |
| Poids en gr de 10 000 m de fil | 470 dTex, |
| Contexture | 13.5 / 13.5 (13.5 fils en chaîne et trame par cm) |

**Tableau IX :** Résultats

| Composition | Référence | g/m$^2$ réel | Scrub 1000 cycles | RD N | % Perf. | RP N | % Perf. | Coeff. friction |
|---|---|---|---|---|---|---|---|---|
| | | | | | | | | |
| Tissu vierge de référence 18 /18 | | | | 232 | | 264 | | |
| | | | | | | | | |
| C-4 | 1 | 50 | OK | 446 | +110 | 326 | + 23 | 1.8 |
| I-2 | 2 | 52 | OK | 356 | + 70 | 433 | +64 | 0.7 |
| | | | | | | | | |
| Tissu vierge de référence 16/16 | | | | 210 | | 198 | | |
| | | | | | | | | |
| C-4 | 3 | 52 | OK | 387 | + 67 | 251 | +26 | 2.8 |
| I-2 | 4 | 48 | OK | 347 | + 50 | 353 | +78 | 0.8 |
| | | | | | | | | |
| Tissu vierge de référence 13.5/13.5 | | | | 178 | | 36 | | |
| | | | | | | | | |
| C-4 | 5 | 50 | OK | 316 | + 77 | 127 | + 303 | 0.9 |
| I-2 | 6 | 53 | OK | 311 | + 75 | 193 | + 467 | 1.1 |

- RD = Résistance à la déchirure (N).
- RP = Résistance au peignage (N).
- Scrub = Résistance à l'abrasion (test scrub en cycles).
- Coefficient friction (Ks) : mesure du coefficient de friction selon la norme ISO 8295.

Les résultats montrent que le niveau de performance d'un tissu enduit 470 dtex 18 x 18 traité avec la composition C-4 à une résistance au peignage comparable au tissu 470 dtex 16x16 traité avec la composition I-2 avec des performances de résistance à la déchirure du tissu enduit tout à fait acceptable.

De plus, on voit qu'un tissu vierge de référence 13.5/13.5 initialement inutilisable pour des applications airbag du fait de faibles propriétés de résistance à la déchirure (178 N) et de résistance au peignage (36 N), lorsque traité par

le procédé selon l'invention devient tout à fait utlisable pour des applications dans le domaine des airbags (résistance à la déchirure: 311 N / résistance au peignage: 193 N).

## Revendications

**1.** Procédé pour améliorer la résistance au peignage et la résistance à la déchirure d'un support fibreux tissé, tricoté, ou non tissé, comprenant les étapes suivantes :

a) la préparation d'une composition silicone d'enduction (A) réticulable comprenant :

- les composants (a-1) ou (a-2) :

- (a-1) correspondant à au moins un polyorganosiloxane susceptible de réticuler par l'action d'un catalyseur à base d'au moins un péroxyde organique, et
- (a-2) correspondant à un mélange de polyorganosiloxane susceptible de réticuler par des réactions de polyaddition comprenant :

- au moins un polyorganosiloxane (I) présentant, par molécule, au moins deux groupes alcényles, en C2-C6 liés au silicium, et
- au moins un polyorganosiloxane (II) présentant, par molécule, au moins deux atomes d'hydrogène liés au silicium,

- une quantité efficace de catalyseur de réticulation consistant : lorsque (a-1) est mis en oeuvre dans au moins un péroxyde organique et lorsque (a-2) est mis en oeuvre dans au moins un métal (ou composé) du groupe du platine,
- éventuellement au moins un promoteur d'adhérence (IV), et
- un système additif (B) améliorant la résistance au peignage et la résistance à la déchirure, dont les constituants sont additionnés séquentiellement ou simultanément, constitué par le mélange de:

- au moins une résine polyorganosiloxane (V) présente jusqu'à 60 % en poids par rapport au poids total de la composition et éventuellement mélangée à au moins un polyorganosiloxane servant de diluant, et
- du carbonate de calcium ($CaCO_3$) dont la quantité est comprise entre 10 et 24% en poids par rapport au poids total de la composition ;

b) l'application d'au moins 10 g/$m^2$ sur une ou deux faces d'un support fibreux tissé, tricoté, ou non tissé de la composition silicone d'enduction (A) préparée à l'étape a), et
c) la réticulation du dépôt formé à l'étape b) pour former un élastomère par chauffage à une température pouvant atteindre 210°C, par rayonnement électromagnétique, en particulier par rayonnement infra-rouge.

**2.** Procédé pour améliorer la résistance au peignage et la résistance à la déchirure d'un support fibreux tissé, tricoté, ou non tissé selon la revendication 1 dans lequel la résine polyorganosiloxane (V) est présente dans le système additif (B) jusqu'à 40 % en poids, de préférence à raison de 5 à 30 % en poids et encore plus préférentiellement entre 11 et 30 % en poids par rapport au poids total de la composition.

**3.** Procédé pour améliorer la résistance au peignage et la résistance à la déchirure d'un support fibreux tissé, tricoté, ou non tissé selon la revendication 2 dans lequel le promoteur d'adhérence (IV) de la composition silicone d'enduction (A) réticulable comporte exclusivement :

(IV.1) au moins un organosilane alcoxylé contenant, par molécule, au moins un groupe alcényle en C2 - C6,
(IV.2) au moins un composé organosilicié comprenant au moins un radical époxy,
(IV.3) au moins un chélate de métal M et/ou un alcoxyde métallique de formule générale : M(OJ)n, avec n = valence de M et J = alkyle linéaire ou ramifiée en C1 - C8,
M étant choisi dans le groupe formé par : Ti, Zr, Ge, Li, Mn, Fe, Al et Mg,

**4.** Procédé pour améliorer la résistance au peignage et la résistance à la déchirure d'un support fibreux tissé, tricoté, ou non tissé selon les revendications 2 ou 3 dans lequel la résine polyorganosiloxane (V) du système additif (B)

comprend des motifs siloxyles Q de formule $SiO_{4/2}$.

5. Procédé pour améliorer la résistance au peignage et la résistance à la déchirure d'un support fibreux tissé, tricoté, ou non tissé selon la revendication 4 dans lequel la résine polyorganosiloxane (V) comprend au moins 2 % en poids de motifs siloxyles de type Q.

6. Procédé pour améliorer la résistance au peignage et la résistance à la déchirure d'un support fibreux tissé, tricoté, ou non tissé selon l'une quelconque des revendications 2 à 5 dans lequel le polyorganosiloxane (I) présente :

(i) des motifs siloxyles de formule :

$$R^1_a Z_b SiO_{\frac{4-(a+b)}{2}}$$

(I-1)

dans laquelle :

- les symboles $R^1$, un groupe alcényle, de préférence vinyle ou allyle,
- les symboles **Z**, Identiques ou différents, représentent chacun un groupe hydrocarboné monovalent, exempt d'action défavorable sur l'activité du catalyseur et choisi parmi les groupes alkyles ayant de **1** à 8 atomes de carbone inclus, éventuellement substitués par au moins un atome d'halogène, et ainsi que parmi les groupes aryles,
- a est 1 ou 2, b est 0, 1 ou 2 et la somme a + b est égale à 1, 2 ou 3, et éventuellement

(ii) des autres motifs siloxyles de formule :

$$Z_c SiO_{\frac{4-c}{2}}$$

(I-2)

dans laquelle :

- Z a la même signification que ci-dessus et c est 0, 1, 2 ou 3.

7. Procédé pour améliorer la résistance au peignage et la résistance à la déchirure d'un support fibreux tissé, tricoté, ou non tissé selon l'une quelconque des revendications 2 à 6 dans lequel le polyorganosiloxane (II) comporte des motifs siloxyle de formule :

$$H_d L_e SiO_{\frac{4-(d+e)}{2}} \quad (II\text{-}1)$$

dans laquelle :

- les groupes L, identiques ou différents, représentent chacun un groupe hydrocarboné monovalent, exempt d'action défavorable sur l'activité du catalyseur et choisi, de préférence, un groupe alkyle ayant de 1 à 8 atomes de carbone inclus, éventuellement substitué par au moins un atome d'halogène, avantageusement, parmi les groupes méthyle, éthyle, propyle et 3,3,3-trifluoropropyle, un groupe aryle et, avantageusement, un radical xylyle, tolyle ou phényle,
- d est 1 ou 2, e est 0, 1 ou 2, la somme d + e est égale à 1, 2 ou 3, et
- éventuellement, au moins une partie des autres motifs étant des motifs de formule moyenne :

$$L_gSiO_{\frac{4-g}{2}}$$

(II-2)

dans laquelle les groupements L ont la même signification que ci-dessus et g est égal à 0, 1, 2 ou 3.

**8.** Procédé pour améliorer la résistance au peignage et la résistance à la déchirure d'un support fibreux tissé, tricoté, ou non tissé selon l'une quelconque des revendications 2 à 7 dans lequel les proportions des polyorganosiloxanes (I) et (II) sont telles que le rapport molaire des atomes d'hydrogène liés au silicium dans (II) sur les radicaux alcényles liés au silicium dans (I) est compris entre 0,4 et 10, de préférence entre 0,6 et 5.

**9.** Procédé pour améliorer la résistance au peignage et la résistance à la déchirure d'un support fibreux tissé, tricoté, ou non tissé selon la revendication 3 **caractérisé en ce que** l'organosiloxane alcoxylé (IV.1) du promoteur (IV) répond à la formule générale suivante :

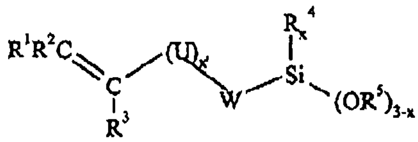

(IV.1)

formule dans laquelle :

- R1, R2, R3 sont des radicaux hydrogénés ou hydrocarbonés identiques ou différents entre eux et représentent l'hydrogène, un alkyle linéaire ou ramifié en C1-C4 ou un phényle éventuellement substitué par au moins un alkyle en C1-C3,
- U est un alkylène linéaire ou ramifié en C1 - C4,
- W est un lien valentiel,
- R4 et R5 sont des radicaux identiques ou différents et représentent un alkyle en C1
- C4 linéaire ou ramifié,
- x'=0 ou 1, et
- x = 0 à 2.

**10.** Procédé pour améliorer la résistance au peignage et la résistance à la déchirure d'un support fibreux tissé, tricoté, ou non tissé selon la revendication 3 **caractérisé en ce que** le composé organosilicié (IV.2) du promoteur (IV) est choisi :

a) soit parmi les produits (IV.2a) répondant à la formule générale suivante :

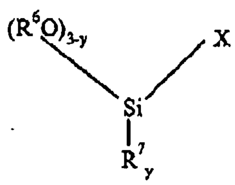

(IV.2a)

formule dans laquelle :

- R6 est un radical alkyle linéaire ou ramifié en C1 - C4,
- R7 est un radical alkyle linéaire ou ramifié,
- y est égal à 0, 1, 2 ou 3, et
- X étant défini par la formule suivante :

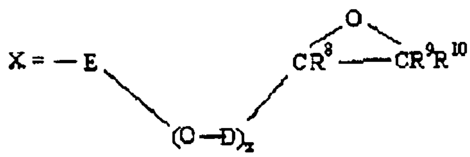

avec :

- E et D qui sont des radicaux identiques ou différents choisis parmi les alkyles en C1-C4 linéaires ou ramifiés,
- z qui est égal à 0 ou 1,
- R8, R9, R10 qui sont des radicaux identiques ou différents représentant l'hydrogène ou un alkyle linéaire ou ramifié en C1-C4, et
- R8 et R9 ou R10 pouvant alternativement constituer ensemble et avec les deux carbones porteurs de l'époxy, un cycle alkyle ayant de 6 à 7 chaînons,

b) soit parmi les produits (IV.2b) constitués par des polydiorganosiloxanes époxyfonctionnels comportant :

(i) au moins un motif siloxyle de formule :

$$X_p G_q SiO_{\frac{4-(p+q)}{2}}$$

(IV.2 b1)

formule dans laquelle ;

- X est le radical tel que défini ci-dessus pour la formule (IV.2 a)
- G est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- p = 1 ou 2,
- q = 0, 1 ou 2,
- p + q = 1, 2 ou 3 et

et (2i) éventuellement au moins un motif siloxyle de formule :

$$G_r SiO_{\frac{4-r}{2}}$$

(IV.2 b2)

formule dans laquelle G a la même signification que ci-dessus et r est égale à 0, 1, 2 ou 3.

**11.** Procédé pour améliorer la résistance au peignage et la résistance à la déchirure d'un support fibreux tissé, tricoté, ou non tissé selon la revendication 3 **caractérisée en ce que** le métal M du chélate et/ou de l'alcoxyde (IV.3) est choisi dans la liste suivante : Ti, Zr, Ge, Li ou Mn.

**12.** Procédé pour améliorer la résistance au peignage et la résistance à la déchirure d'un support fibreux tissé, tricoté, ou non tissé selon les revendications 9, 10 et 11 dans lequel le promoteur d'adhérence (IV) comprend un mélange de :

- vinyltriméthoxysilane (VTMO) représentatif de la formule (IV.1),
- 3-glycidoxypropyltiméthoxysilane (GLYMO) représentatif de la formule (IV.2), et
- titanate de butyle représentatif de la formule (IV.3).

**13.** Composition silicone d'enduction (A) réticulable par des réactions de polyaddition pour améliorer la résistance au

peignage et la résistance à la déchirure d'un support fibreux tissé, tricoté, ou non tissé constituée par le mélange formé de :

(a) au moins un polyorganosiloxane (I) présentant, par molécule, au moins deux groupes alcényles, en C2-C6 liés au silicium,
(b) au moins un polyorganosiloxane (II) présentant, par molécule, au moins deux atomes d'hydrogène liés au silicium,
(c) une quantité catalytiquement efficace d'au moins un catalyseur (III), composé d'au moins un métal appartenant au groupe du platine,
(d) au moins un promoteur d'adhérence (IV),
(e) d'un système additif (B) améliorant la résistance au peignage et la résistance à la déchirure, dont les constituants sont additionnés séquentiellement ou simultanément au mélange, constitué par le mélange de:

- au moins une résine polyorganosiloxane (V) présente jusqu'à 60 % en poids par rapport au poids total de la composition et éventuellement mélangée à au moins un polyorganosiloxane servant de diluant, et
- du carbonate de calcium ($CaCO_3$) dont la quantité est comprise entre 10 et 24% en poids par rapport au poids total de la composition ;

(f) éventuellement au moins un inhibiteur de réticulation (VI),
(h) éventuellement au moins un additif de coloration (VII), et
(i) éventuellement au moins un additif (VIII) pour améliorer la résistance au feu.

**14.** Composition selon la revendication 13 comprenant:

- deux parties A et B distinctes destinées à être mélangées pour former la composition, et
- l'une de ces parties A et B comprend le catalyseur (III) et une seule espèce (I) ou (ii) de polyorganosiloxane.

**15.** Support fibreux tissé, tricoté, ou non tissé enduit sur une ou deux faces d'un élastomère susceptible d'être obtenu :

a)- par l'application d'au moins 10 $g/m^2$ sur une ou deux faces d'un support fibreux tissé, tricoté, ou non tissé de la composition silicone d'enduction (A) selon la revendication 13, et

- la réticulation du dépôt formé à l'étape précédente pour former un élastomère par chauffage à une température pouvant atteindre 210°C ou par rayonnement électromagnétique, en particulier par rayonnement infra-rouge, ou

b) par le procédé selon l'une quelconque des revendication 1 à 12.

**16.** Support selon la revendication 15 caractérisé en ce le support fibreux est un tissu à contexture ouverte ayant une porosité > 10 $l/dm^2/min$ suivant la norme ISO 9237.

**17.** Sac gonflable pour la protection d'un occupant de véhicule, formé à partir d'un support enduit selon la revendication 15 ou 16.

**18.** Utilisation de la composition silicone d'enduction (A) réticulable selon les revendications 13 ou 14 pour l'enduction de support fibreux tissé, tricoté, ou non tissé.

**19.** Utilisation selon la revendication 18 de la composition silicone d'enduction (A) réticulable pour l'enduction de supports destinés à former des sacs gonflables pour la protection d'occupants de véhicules.

**20.** Utilisation selon la revendication 18 ou 19, caractérisé en que le support est un tissu à contexture ouverte ayant une porosité > 10 $l/dm^2/min$ suivant la norme ISO 9237.

## Claims

**1.** Process for improving the combing strength and the tear strength of a woven, knitted or nonwoven fibrous support, comprising the following steps:

a) the preparation of a curable silicone coating composition (A) comprising:

- components (a-1) or (a-2):

- (a-1) corresponding to at least one polyorganosiloxane that may be cured by the action of a catalyst based on at least one organic peroxide, and
- (a-2) corresponding to a polyorganosiloxane blend that may be cured by polyaddition reactions, comprising:

- at least one polyorganosiloxane (I) containing, per molecule, at least two C2-C6 alkenyl groups linked to silicon, and
- at least one polyorganosiloxane (II) containing, per molecule, at least two hydrogen atoms linked to silicon,

- an effective amount of curing catalyst consisting: when (a-1) is used, of at least one organic peroxide, and when (a-2) is used, of at least one metal (or compound) of the platinum group,
- optionally, at least one adhesion promoter (IV), and
- an additive system (B) for improving the combing strength and the tear strength, the constituents of which are added sequentially or simultaneously, consisting of a mixture of:

- at least one polyorganosiloxane resin (V) present at up to 60% by weight relative to the total weight of the composition and optionally mixed with at least one polyorganosiloxane serving as diluent, and
- calcium carbonate ($CaCO_3$), the amount of which is between 10 and 2.4% by weight relative to the total weight of the composition;

b) the application of at least 10 $g/m^2$, to one or two faces of a woven, knitted or nonwoven fibrous support of the silicone coating composition (A) prepared in step a), and
c) the curing of the deposit formed in step b) to form an elastomer by heating to a temperature that may be up to 210°C, by electromagnetic radiation, in particular by infrared radiation.

**2.** Process for improving the combing strength and the tear strength of a woven, knitted or nonwoven fibrous support according to Claim 1, in which the polyorganosiloxane resin (V) is present in the additive system (B) at up to 40% by weight and preferably in a proportion of from 5% to 30% by weight and more preferably between 11 and 30% by weight relative to the total weight of the mixture.

**3.** Process for improving the combing strength and the tear strength of a woven, knitted or nonwoven fibrous support according to Claim 2, in which the adhesion promoter (IV) of the curable silicone coating composition (A) exclusively comprises:

- (IV.1) at least one alkoxylated organosilane containing, per molecule, at least one C2-C6 alkenyl group,
- (IV.2) at last one organosilicon compound comprising at least one epoxy radical, and
- (IV.3) at least one metal chelate M and/or a metal alkoxide of general formula: M(OJ)n, with n = valency of M and J = linear or branched C1-C8 alkyl,
M being chosen from the group formed by: Ti, Zr, Ge, Li, Mn, Fe, Al and Mg.

**4.** Process for improving the combing strength and the tear strength of a woven, knitted or nonwoven fibrous support according to either of Claims 2 and 3, in which the polyorganosiloxane resin (V) of the additive system (B) comprises siloxyl units Q of formula $SiO_{4/2}$.

**5.** Process for improving the combing strength and the tear strength of a woven, knitted or nonwoven fibrous support according to Claim 4, in which the polyorganosiloxane resin (V) comprises at least 2% by weight of siloxyl units of type Q.

**6.** Process for improving the combing strength and the tear strength of a woven, knitted or nonwoven fibrous support according to any one of Claims 2 to 5, in which the polyorganosiloxane (I) contains:

(i) siloxyl units of formula:

$$R^1_a Z_b SiO \frac{4-(a+b)}{2} \quad (I-1)$$

in which:

- the symbols $R^1$ represent an alkenyl group, preferably vinyl or allyl,
- the symbols Z, which may be identical or different, each represent a monovalent hydrocarbon-based group, free of unfavourable action on the activity of the catalyst and chosen from alkyl groups containing from 1 to 8 carbon atoms inclusive, optionally substituted with at least one halogen atom, and also from aryl groups,
- a is 1 or 2, b is 0, 1 or 2 and the sum a + b is equal to 1, 2 or 3, and optionally (ii) other siloxyl units of formula:

Zc SiO **Erreur !** (I-2)

in which:

- Z has the same meaning as above and c is 0, 1, 2 or 3.

**7.** Process for improving the combing strength and the tear strength of a woven, knitted or nonwoven fibrous support according to any one of Claims 2 to 6, in which the polyorganosiloxane (II) comprises siloxyl units of formula:

$$H_d L_e SiO \frac{4-(d+e)}{2} \quad (II-1)$$

in which:

- the groups L, which may be identical or different, each represent a monovalent hydrocarbon-based group, free of unfavourable action on the activity of the catalyst and chosen, preferably, from an alkyl group containing from 1 to 8 carbon atoms inclusive, optionally substituted with at least one halogen atom, advantageously from methyl, ethyl, propyl and 3,3,3-trifluoropropyl groups, an aryl group, and advantageously a xylyl, tolyl or phenyl radical,
- d is 1 or 2, a is 0, 1 or 2, the sum d + e is equal to 1, 2 or 3, and
- optionally, at least some of the other units being units of mean formula:

$$L_g SiO \frac{4-g}{2}$$

(II-2)

in which the groups L have the same meaning as above and g is equal to 0, 1, 2 or 3.

**8.** Process for improving the combing strength and the tear strength of a woven, knitted or nonwoven fibrous support according to any one of Claims 2 to 7, in which the proportions of the polyorganosiloxanes (I) and (II) are such that the molar ratio of the hydrogen atoms linked to silicon in (II) to the alkenyl radicals linked to silicon in (I) is between 0.4 and 10 and preferably between 0.6 and 5.

**9.** Process for improving the combing strength and the tear strength of a woven, knitted or nonwoven fibrous support according to Claim 3, **characterized in that** the alkoxylated organosiloxane (IV.1) of the promoter (IV) corresponds to the following general formula:

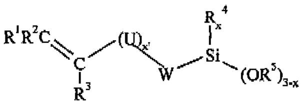

(IV.1)

in which formula:

- R1, R2 and R3 are identical or different hydrogenated or hydrocarbon-based radicals and represent hydrogen, a linear or branched C1-C4 alkyl or a phenyl optionally substituted with at least one C1-C3 alkyl,
- U is a linear or branched C1-C4 alkylene,
- W is a valency bond,
- R4 and R5 are identical or different radicals and represent a linear or branched C1-C4 alkyl radical,
- x'= 0 or 1, and
- x = 0 to 2.

**10.** Process for improving the combing strength and the tear strength of a woven, knitted or nonwoven fibrous support according to Claim 3, **characterized in that** the organosilicon compound (IV.2) of the promoter (IV) is chosen:

a) either from the products (IV.2a) corresponding to the following general formula:

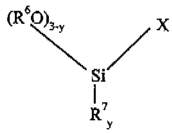

(IV.2a)

in which formula:

- R6 is a linear or branched C1-C4 alkyl radical,
- R7 is a linear or branched alkyl radical,
- y is equal to 0, 1, 2 or 3, and
- X being defined by the following formula:

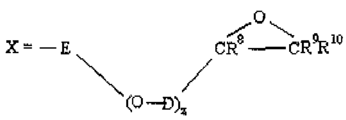

with:

- E and D, which are identical or different radicals chosen from linear or branched C1-C4 alkyls,
- z, which is equal to 0 or 1,
- R8, R9 and R10, which are identical or different radicals representing hydrogen or a linear or branched C1-C4 alkyl, and
- R8 and R9 or R10 alternatively possibly constituting, together and with the two carbons bearing the epoxy, a 5- to 7-membered alkyl ring,

b) or from the products (IV.2b) consisting of epoxy-functional polydiorganosiloxanes comprising:

(i) at least one siloxyl unit of formula:

$$X_p G_q SiO_{\frac{4-(p+q)}{2}}$$

(IV.2 b1)

in which formula:

- X is the radical as defined above for formula (IV.2 a)
- G is a monovalent hydrocarbon-based group, free of unfavourable action on the activity of the catalyst and chosen from alkyl groups containing from 1 to 8 carbon atoms inclusive, optionally substituted with at least one halogen atom, and also from aryl groups,
- p=1 1 or 2,
- q = 0, 1 or 2,
- p + q = 1, 2 or 3, and
(2i) optionally at least one siloxyl unit of formula:

$$G_r SiO_{\frac{4-r}{2}}$$

(IV.2 b2)

in which formula G has the same meaning as above and r is equal to 0, 1, 2 or 3.

**11.** Process for improving the combing strength and the tear strength of a woven, knitted or nonwoven fibrous support according to Claim 3, **characterized in that** the metal M of the chelate and/or of the alkoxide (IV.3) is chosen from the following list: Ti, Zr, Ge, Li or Mn.

**12.** Process for improving the combing strength and the tear strength of a woven, knitted or nonwoven fibrous support according to Claims 9, 10 and 11, in which the adhesion promoter (IV) comprises a mixture of:

- vinyltrimethoxysilane (VTMO), representative of formula (IV. 1),
- 3-glycidoxypropyltrimethoxysilane (GLYMO), representative of formula (IV.2), and
- butyl titanate, representative of formula (IV.3).

**13.** Silicone coating composition (A) curable by polyaddition reactions, for improving the combing strength and the tear strength of a woven, knitted or nonwoven fibrous support, consisting of a mixture formed from:

(a) at least one polyorganosiloxane (I) containing, per molecule, at least two C2-C6 alkenyl groups linked to silicon,
(b) at least one polyorganosiloxane (II) containing, per molecule, at least two hydrogen atoms linked to silicon,
(c) a catalytically effective amount of at least one catalyst (III), composed of at least one metal belonging to the platinum group,
(d) at least one adhesion promoter (IV),
(e) an additive system (B) for improving the combing strength and the tear strength, the constituents of which are added sequentially or simultaneously, consisting of a mixture formed from:

- at least one polyorganosiloxane resin (V) present at up to 60% by weight relative to the total weight of the composition and optionally mixed with at least one polyorganosiloxane serving as diluent, and
- calcium carbonate ($CaCO_3$), the amount of which is between 10 and 24% by weight relative to the total weight of the composition;

(f) optionally, at least one curing inhibitor (VI),
(h) optionally, at least one coloration additive (VII), and
(i) optionally, at least one additive (VIII) for improving the fire resistance.

**14.** Composition according to Claim 13, comprising:

- two separate parts A and B, which are intended to be mixed together to form the composition, and
- one of these parts A or B comprising the catalyst (III) and only one polyorganosiloxane species (I) or (II).

**15.** Woven, knitted or nonwoven support coated on one or two faces with an elastomer that may be obtained:

a)- by applying at least 10 g/$m^2$ onto one or two faces of a woven, knitted or nonwoven fibrous support of the

silicone coating composition (A) according to Claim 13, and

- curing the deposit formed in the preceding step to form an elastomer by heating to a temperature that may be up to 210°C or by electromagnetic radiation, in particular by infrared radiation, or

b) by the process according to any one of Claims 1 to 12.

**16.** Support according to Claim 15, **characterized in that** the fibrous support is a fabric with an open contexture having a porosity > 10 l/dm$^2$/min according to ISO standard 9237.

**17.** Inflatable bag for protecting an occupant of a vehicle, formed from a support coated according to Claim 15 or 16.

**18.** Use of the curable silicone composition (A) according to either of Claims 13 and 14 for coating a woven, knitted or nonwoven fibrous support.

**19.** Use according to Claim 18 of the curable silicone coating composition (A), for coating supports intended to form inflatable bags for protecting the occupants of vehicles.

**20.** Use according to Claim 18 or 19, **characterized in that** the support is a fabric with an open contexture having a porosity > 10 l/dm$^2$/min according to ISO standard 9237.

**Patentansprüche**

**1.** Verfahren zur Verbesserung der Ausfaserbeständigkeit und der Reißfestigkeit eines gewebten, gestrickten oder vliesartigen Trägers aus Fasern, welches die folgenden Schritte umfasst:

a) Herstellen einer vernetzbaren Silikonbeschichtungszusammensetzung (A), die Folgendes umfasst:

- die Bestandteile (a-1) oder (a-2):

  - wobei (a-1) mindestens einem Polyorganosiloxan entspricht, das durch die Einwirkung eines Katalysators auf Grundlage mindestens eines organischen Peroxids vernetzt werden kann, und
  - wobei (a-2) einer Polyorganosiloxanmischung entspricht, die durch Polyadditionsreaktionen vernetzt werden kann und Folgendes umfasst:

    - mindestens ein Polyorganosiloxan (I), das pro Molekül mindestens zwei C2-C6-Alkenylgruppen aufweist, welche an das Silicium gebunden sind, und
    - mindestens ein Polyorganosiloxan (II), das pro Molekül mindestens zwei Wasserstoffatome aufweist, die an das Silicium gebunden sind,

- eine wirksame Menge an Vernetzungskatalysator, der aus Folgendem besteht: wenn (a-1) eingesetzt wird, aus mindestens einem organischen Peroxid und, wenn (a-2) eingesetzt wird, aus mindestens einem Metall (oder einer Verbindung) aus der Platingruppe,
- möglicherweise mindestens einen Haftvermittler (IV), und
- ein Zusatzstoffsystem (B), das die Ausfaserbeständigkeit und die Reißfestigkeit verbessert, wobei dessen Bestandteile nacheinander oder gleichzeitig zugesetzt werden, bestehend aus der Mischung aus:

  - mindestens einem Polyorganosiloxanharz (V), das bis zu 60 Gew.-% ausmacht, bezogen auf das Gesamtgewicht der Zusammensetzung, und möglicherweise mit mindestens einem Polyorgannsiloxan vermischt ist, welches als Verdünnungsmittel dient, und
  - Calciumcarbonat ($CaCO_3$), dessen Menge im Bereich von 10 bis 24 Gew.-% liegt, bezogen auf das Gesamtgewicht der Zusammensetzung;

b) Aufbringen von mindestens 10 g/m$^2$ der Silikonbeschichtungszusammensetzung (A), die in Schritt a) hergestellt wurde, auf eine oder beide Seiten eines gewebten, gestrickten oder vliesartigen Trägers aus Fasern, und
c) Vernetzen des Stoffes, der in Schritt b) gebildet wurde, um durch Erhitzen auf eine Temperatur von bis zu 210 °C, durch elektromagnetische Strahlung, insbesondere durch Infrarotstrahlung, ein Elastomer zu bilden.

**2.** Verfahren zur Verbesserung der Ausfaserbeständigkeit und der Reißfestigkeit eines gewebten, gestrickten oder vliesartigen Trägers aus Fasern nach Anspruch 1, wobei das Polyorganosiloxanharz (V) in dem Zusatzstoffsystem (B) bis zu 40 Gew.-%, vorzugsweise etwa 5 bis 30 Gew.-% und mit noch größerem Vorzug zwischen 11 und 30 Gew.-% ausmacht, bezogen auf das Gesamtgewicht der Zusammensetzung.

**3.** Verfahren zur Verbesserung der Ausfaserbeständigkeit und der Reißfestigkeit eines geweben, gestrickten oder vliesartigen Trägers aus Fasern nach Anspruch 2, wobei der Haftvermittler (IV) der vernetzbaren Silikonbeschichtungszusammensetzung (A) ausschließlich Folgendes aufweist:

(IV.1) mindestens ein alkoxyliertes Organosilan, das pro Molekül mindestens eine C2-C6-Alkenylgruppe enthält,
(IV.2) mindestens eine Organosiliciumverbindung, die mindestens einen Epoxyrest umfasst,
(IV.3) mindestens ein Chelat eines Metalls M und/oder eine Metallalkoxidverbindung der folgenden allgemeinen Formel: M(OJ)n, mit n = Wertigkeit von M und J = geradkettiges oder verzweigtes C1-C8-Alkyl,
wobei M aus der Gruppe ausgewählt ist, die aus Folgendem gebildet ist: Ti, Zr, Ge, Li, Mn, Fe, Al und Mg.

**4.** Verfahren zur Verbesserung der Ausfaserbeständigkeit und der Reißfestigkeit eines gewebten, gestrickten oder vliesartigen Trägers aus Fasern nach den Ansprüchen 2 oder 3, wobei das Polyorganosiloxanharz (V) des Zusatzstoffsystems (B) siloxylierte Bausteine Q der Formel $SiO_{4/2}$ umfasst.

**5.** Verfahren zur Verbesserung der Ausfaserbeständigkeit und der Reißfestigkeit eines gewebten, gestrickten oder vliesartigen Trägers aus Fasern nach Anspruch 4, wobei das Polyorganosiloxanharz (V) mindestens 2 Gew.-% von den siloxylierten Bausteinen vom Typ Q umfasst.

**6.** Verfahren zur Verbesserung der Ausfaserbeständigkeit und der Reißfestigkeit eines gewebten, gestrickten oder vliesartigen Trägers aus Fasern nach einem beliebigen der Ansprüche 2 bis 5, wobei das Polyorganosiloxan (I) Folgendes aufweist:

(i) siloxylierte Bausteine der Formel:

$$R^1_a Z_b SiO_{\frac{4-(a+b)}{2}}$$

(I-1)

wobei:

- die Formelzeichen $R^1$ eine Alkenylgruppe, vorzugsweise Vinyl oder Allyl, darstellen,
- die Formelzeichen Z, die identisch oder verschiedenartig sind, jeweils eine einbindige Kohlenwasserstoffgruppe darstellen, die keinerlei nachteilige Wirkung auf die Aktivität des Katalysators hat und aus den Alkylgruppen mit 1 bis einschließlich 8 Kohlenstoffatomen, welche mit mindestens einem Halogenatom substituiert sind, sowie aus den Arylgruppen ausgewählt ist,
- a gleich 1 oder 2 ist, b gleich 0, 1 oder 2 ist und die Summe a + b = 1, 2 oder 3 ist, und möglicherweise

(ii) weitere siloxylierte Bausteine der Formel:

$$Z_c SiO_{\frac{4-c}{2}}$$

(I-2)

wobei:

- Z dieselbe Bedeutung wie oben hat und c gleich 0, 1, 2 oder 3 ist.

**7.** Verfahren zur Verbesserung der Ausfaserbeständigkeit und der Reißfestigkeit eines gewebten, gestrickten oder vliesartigen Trägers aus Fasern nach einem beliebigen der Ansprüche 2 bis 6, wobei das Polyorganosiloxan (II) siloxylierte Bausteine der folgenden Formel aufweist:

$$H_dL_eSiO_{\frac{4-(d+e)}{2}} \quad (II\text{-}1)$$

wobei:

- die Gruppen L, die identisch oder verschiedenartig sind, jeweils eine einbindige Kohlenwasserstoffgruppe darstellen, die keine nachteilige Wirkung auf die Aktivität des Katalysators hat und vorzugsweise aus einer Alkylgruppe mit 1 bis einschließlich 8 Kohlenstoffatomen, welche möglicherweise mit mindestens einem Halogenatom substituiert ist, vorteilhafterweise aus den Gruppen Methyl, Ethyl, Propyl und 3,3,3-Trifluorpropyl, aus einer Arylgruppe und, vorteilhafterweise, aus einem Xylyl-, Tolyl- oder Phenylrest ausgewählt ist,
- d gleich 1 oder 2 ist, e gleich 0, 1 oder 2 ist, die Summe d + e gleich 1, 2 oder 3 ist, und
- es sich möglicherweise bei mindestens einem Teil der weiteren Bausteine um Bausteine mit der folgenden mittleren Formel handelt:

$$L_gSiO_{\frac{4-g}{2}}$$

(II-2)

wobei die Gruppen L dieselbe Bedeutung wie oben haben und g gleich 0, 1, 2 oder 3 ist.

**8.** Verfahren zur Verbesserung der Ausfaserbeständigkeit und der Reißfestigkeit eines gewebten, gestrickten oder vliesartigen Trägers aus Fasern nach einem beliebigen der Ansprüche 2 bis 7, wobei die Anteile der Polyorganosiloxane (I) und (II) derart sind, dass das Molverhältnis zwischen den Wasserstoffatomen, die an das Silicium in (II) gebunden sind, und den Alkenylresten, die an das Silicium in (I) gebunden sind, im Bereich von 0,4 bis 10, vorzugsweise von 0,6 bis 5, liegt.

**9.** Verfahren zur Verbesserung der Ausfaserbeständigkeit und der Reißfestigkeit eines gewebten, gestrickten oder vliesartigen Trägers aus Fasern nach Anspruch 3, **dadurch gekennzeichnet, dass** das alkoxylierte Organosiloxan (IV.1) des Vermittlers (IV) der folgenden allgemeinen Formel entspricht:

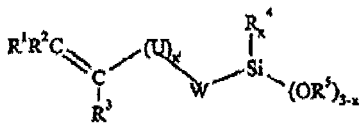

(IV.1)

wobei in dieser Formel:

- R1, R2, R3 wasserstoffhaltige Reste oder Kohlenwasserstoffreste sind, die identisch oder voneinander verschieden sind und für Wasserstoff, ein geradkettiges oder verzweigtes C1-C4-Alkyl oder ein Phenyl, welches möglicherweise durch mindestens ein C1-C3-Alkyl substituiert ist, stehen,
- U ein geradkettiges oder verzweigtes C1-C4-Alkylen ist,
- W eine Valenzbindung ist,
- R4 und R5 Reste sind, die identisch oder verschiedenartig sind und für ein geradkettiges oder verzweigtes C1-C4-Alkyl stehen,
- x' = 0 oder 1, und
- x = 0 bis 2.

**10.** Verfahren zur Verbesserung der Ausfaserbeständigkeit und der Reißfestigkeit eines gewebten, gestrickten oder vliesartigen Trägers aus Fasern nach Anspruch 3, **dadurch gekennzeichnet, dass** die Organosiliciumverbindung (IV.2) des Vermittlers (IV) aus Folgendem ausgewählt ist:

a) entweder aus den Stoffen (IV.2a), die der folgenden allgemeinen Formel entsprechen:

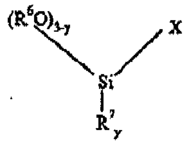

(IV.2a)

wobei in dieser Formel:

- R6 ein geradkettiger oder verzweigter C1-C4-Alkylrest ist,
- R7 ein geradkettiger oder verzweigter Alkylrest ist,
- y gleich 0, 1, 2 oder 3 ist, und
- wobei X durch die folgende Formel definiert ist:

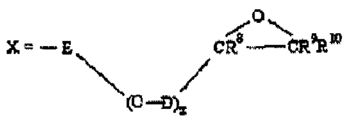

mit:

- E und D, die identische oder verschiedenartige Reste sind, welche aus den geradkettigen oder verzweigten C1-C4-Alkylen ausgewählt sind,
- z, das gleich 0 oder 1 ist,
- R8, R9, R10, die identische oder verschiedenartige Reste sind, die für Wasserstoff oder ein geradkettiges oder verzweigtes C1-C4-Alkyl stehen, und
- wobei R8 und R9 oder R10 alternativ dazu gemeinsam und mit den beiden Kohlenstoffatomen, an denen das Epoxy sitzt, einen Alkylring mit 5 bis 7 Gliedern bilden können,

b) oder aus den Stoffen (IV.2b), die aus den epoxyfunktionellen Polydiorganosiloxanen bestehen, welche Folgendes aufweisen:

(i) mindestens einen Siloxylbaustein der Formel:

$$X_p G_q SiO_{\frac{4-(p+q)}{2}}$$

(IV.2 b1)

wobei in dieser Formel:

- X der Rest gemäß der obigen Begriffsbestimmung für die Formel (IV.2a) ist
- G eine einbindige Kohlenwasserstoffgruppe ist, die keinerlei nachteilige Wirkung auf die Aktivität des Katalysators hat und aus den Alkylgruppen mit 1 bis einschließlich 8 Kohlenstoffatomen, welche mit mindestens einem Halogenatom substituiert sind, sowie aus den Arylgruppen ausgewählt ist,
- p = 1 oder 2,
- q = 0, 1 oder 2,
- p + q = 1, 2 oder 3, und

und (2i) möglicherweise mindestens einen Siloxylbaustein der Formel:

$$G_r SiO_{\frac{4-r}{2}}$$

(IV.2 b2)

wobei in dieser Formel G dieselbe Bedeutung wie oben hat und r gleich 0, 1, 2 oder 3 ist.

**11.** Verfahren zur Verbesserung der Ausfaserbeständigkeit und der Reißfestigkeit eines gewebten, gestrickten oder vliesartigen Trägers aus Fasern nach Anspruch 3, **dadurch gekennzeichnet, dass** das Metall M des Chelats und/oder der Alkoxidverbindung (IV.3) aus der folgenden Liste ausgewählt ist: Ti, Zr, Ge, Li oder Mn.

**12.** Verfahren zur Verbesserung der Ausfaserbeständigkeit und der Reißfestigkeit eines gewebten, gestrickten oder vliesartigen Trägers aus Fasern nach den Ansprüchen 9, 10 und 11, wobei der Haftvermittler (IV) eine Mischung aus Folgendem umfasst:

- Vinyltrimethoxysilan (VTMO) als Vertreter der Formel (IV. 1),
- 3-Glycidoxypropyltrimethoxysilan (GLYMO) als Vertreter der Formel (IV.2), und
- Butyltitanat als Vertreter der Formel (IV.3).

**13.** Silikonbeschichtungszusammensetzung (A), die durch Polyadditionsreaktionen vernetzt werden kann, um die Ausfaserbeständigkeit und die Reißfestigkeit eines gewebten, gestrickten oder vliesartigen Trägers aus Fasern zu verbessern, wobei sie aus der Mischung besteht, die aus Folgendem gebildet ist:

(a) mindestens einem Polyorganosiloxan (I), das pro Molekül mindestens zwei C2-C6-Alkenylgruppen aufweist, welche an das Silicium gebunden sind,
(b) mindestens einem Polyorganosiloxan (II), das pro Molekül mindestens zwei Wasserstoffatome aufweist, die an das Silicium gebunden sind,
(c) einer katalytisch wirksamen Menge mindestens eines Katalysators (III), der sich aus mindestens einem Metall zusammensetzt, welches der Platingruppe angehört,
(d) mindestens einem Haftvermittler (IV),
(e) einem Zusatzstoffsystem (B), das die Ausfaserbeständigkeit und die Reißfestigkeit verbessert, wobei dessen Bestandteile der Mischung nacheinander oder gleichzeitig zugesetzt werden, bestehend aus der Mischung aus:

- mindestens einem Polyorganosiloxanharz (V), das bis zu 60 Gew.-% ausmacht, bezogen auf das Gesamtgewicht der Zusammensetzung, und möglicherweise mit mindestens einem Polyorganosiloxan vermischt ist, welches als Verdünnungsmittel dient, und
- Calciumcarbonat ($CaCO_3$), dessen Menge im Bereich von 10 bis 24 Gew.-% liegt, bezogen auf das Gesamtgewicht der Zusammensetzung;

(f) möglicherweise mindestens einem Vernetzungsinhibitor (VI),
(h) möglicherweise mindestens einem färbenden Zusatzstoff (VII), und
(i) möglicherweise mindestens einem Zusatzstoff (VIII) zur Verbesserung der Feuerfestigkeit.

**14.** Zusammensetzung nach Anspruch 13, die Folgendes umfasst:

- zwei getrennte Teilmengen A und B, die dazu bestimmt sind, zwecks Bildung der Zusammensetzung vermischt zu werden, und
- eine dieser Teilmengen A und B umfasst den Katalysator (III) und eine einzige Polyorganosiloxan-Spezies (I) oder (II).

**15.** Gewebter, gestrickter oder vliesartiger Träger aus Fasern, der auf einer oder beiden Seiten mit einem Elastomer beschichtet ist, das folgendermaßen erhalten werden kann:

a)

- durch Aufbringen von mindestens 10 $g/m^2$ der Silikonbeschichtungszusammensetzung (A) nach Anspruch 13, auf eine oder beide Seiten eines gewebten, gestrickten oder vliesartigen Trägers aus Fasern, und
- Vernetzen des Stoffes, der im vorherigen Schritt gebildet wurde, um durch Erhitzen auf eine Temperatur von bis zu 210 °C oder durch elektromagnetische Strahlung, insbesondere durch Infrarotstrahlung, ein Elastomer zu bilden, oder

b) durch das Verfahren nach einem beliebigen der Ansprüche 1 bis 12.

16. Träger nach Anspruch 15, **dadurch gekennzeichnet, dass** es sich bei dem Träger aus Fasern um ein Gewebe mit offener Gewebebindung handelt, das eine Porenbeschaffenheit von > 10 1/$dm^2$/min gemäß der Norm ISO 9237 hat.

17. Airbag zum Schutz von Fahrzeuginsassen, gebildet aus einem Träger, der nach Anspruch 15 oder 16 beschichtet ist.

18. Verwendung der vernetzbaren Silikonbeschichtungszusammensetzung (A) nach den Ansprüchen 13 oder 14 zum Beschichten von gewebten, gestrickten oder vliesartigen Trägern aus Fasern.

19. Verwendung nach Anspruch 18 der vernetzbaren Silikonbeschichtungszusammensetzung (A) zum Beschichten von Trägern, die dazu bestimmt sind, Airbags zum Schutz von Fahrzeuginsassen zu bilden.

20. Verwendung nach Anspruch 18 oder 19, **dadurch gekennzeichnet, dass** es sich bei dem Träger um ein Gewebe mit offener Gewebebindung handelt, das eine Porenbeschaffenheit von 10 l/$dm^2$/min gemäß der Norm ISO 9237 hat.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2668106 A
- EP 0553840 A
- US 5296298 A
- EP 0681014 A
- US 6387451 B1
- US 3220972 A
- US 3697473 A
- US 4340709 A
- US 3284406 A
- US 3434366 A
- US 3159601 A
- US 3159602 A
- EP 0057459 A
- EP 0188978 A
- EP 0190530 A
- US 3419593 A
- US 3715334 A
- US 3377432 A
- US 3814730 A
- FR 1528464 B
- FR 2372874 A
- US 5516938 A